# EUROPÄISCHE PATENTANMELDUNG

(11) **EP 1 995 125 A1**
(43) Veröffentlichungstag der Anmeldung: **26.11.2008**
(21) Anmeldenummer: 08464004.4
(22) Anmeldetag: 26.02.2008
(51) Int. Cl.: B60R 21/0136, B60R 21/0132, B60R 21/013

(54) **Sensoranordnung für ein Rückhaltesystem in einem Nutzfahrzeug**

(71) Anmelder: Continental Automotive GmbH, 30165 Hannover (DE)
(72) Erfinder: David, Cosmin, 300765 Timisoara (RO); Franzen, Frank, 93358 Train (DE); Gruia, Ioana, 300700 Timisoara (RO)

(57) **Zusammenfassung**

Es wird eine Sensoranordnung (220) beschrieben für ein Rückhaltesystem in einem Fahrzeug, insbesondere einem Nutzfahrzeug, bei dem die Seitentüren der Fahrgastkabine bzw. des Führerhauses (221) unmittelbar an denjenigen Bereich angrenzen, in dem das Fahrzeug im Fall eines Frontal-Crashs, eines Offset-Crashs oder eines Angular-Frontal-Crashs getroffen wird. Die Sensoranordnung umfasst eine Airbag-KontrollEinheit (ACU; Airbag Control Unit) (222) mit mindestens einem darin integrierten, Beschleunigungen in Richtung der x-Achse erfassenden Beschleunigungssensor (223, 224). Außerdem sind in den Seitentüren mindestens jeweils ein Aufprallsensor (228, 230) in Form eines den Luftdruck in der jeweiligen Seitentür erfassenden Drucksensors (229, 231) angeordnet, als Sicherungs-Sensor (229, 231) zur Plausibilisierung eines Frontal-Crashs und/oder Offset-Crashs und/oder Angular-Frontal-Crashs.

## Beschreibung

Die Erfindung betrifft eine Sensoranordnung für ein Rückhaltesystem in einem Nutzfahrzeug, wie etwa einem Leicht-Lastkraftwagen (L-LKW), einem LKW, einem Bus, gemäß dem Oberbegriff des Anspruchs 1.

Insassenschutzsysteme, wie etwa Airbags umfassende Rückhaltesysteme, mit hoch entwickelten Komponenten sind üblicherweise in Personenkraftwagen (PKWs) zu finden.

Eine Sensoranordnung für ein Rückhaltesystem in einem PKW umfasst typischerweise für eine Frontalaufprall-Erkennung ein elektronisches Airbag-Steuergerät (ACU; Airbag Control Unit), das typischerweise in der Fahrgastzelle, vorzugsweise im Bereich des Fahrzeugbodens im Bereich des Kardan- oder Mitteltunnels angeordnet ist. Die ACU umfasst als Haupt-Sensor einen ersten mikromechanischen Beschleunigungssensor, der Bescheunigungen von typischerweise bis zu 250-facher, neuere Modelle sogar bis zu 480-facher Erdbeschleunigung (g) in Richtung mit der Fahrtrichtung übereinstimmender positiver x-Achse erfassen bzw. messen kann. Zur Plausibilisierung des Unterscheidungsvermögens des ersten Beschleunigungssensors ist ein zweiter mikromechanischer Beschleunigungssensor als Sicherungs-Sensor vorgesehen, der üblicherweise nur geringere Beschleunigungen, z.B. bis zu 70 g, jedoch in Richtung der negativen x-Achse, also entgegen der Fahrtrichtung erfasst, wobei auch ein mit dem ersten Beschleunigungssensor identischer, Beschleunigungen in Richtung der positiven oder negativen x-Achse erfassender Beschleunigungssensor als Sicherungs-Sensor vorgesehen sein kann. Zur Plausibilisierung werden alternativ auch als 'trigger switch' bezeichnete, so genannte Auslöseschalter als Sicherungs-Sensoren verwendet, welche eine freie Masse in einer Röhre umfassen, die bei einer auftretenden Beschleunigung einen Reed-Kontakt schließt. Der auch als 'Safing-Sensor' bezeichnete Sicherungs-Sensor ist normalerweise auf der Platine der ACU angeordnet und ist damit in die ACU integriert.

Aufgrund der Tatsache, dass eine im Falle eines Frontalaufpralls bzw. Frontal-Crashs auftretende Beschleunigung bzw. Verzögerung insbesondere bei hoher Aufprallgeschwindigkeit erst sehr spät in der ACU durch gewöhnliche Beschleunigungssensoren erfasst werden kann, weil die Verzögerung durch den gesamten Motorraum bzw. Vorbau zum Einbauort der Sensoranordnung, also bis zur ACU übertragen werden muss, ist darüber hinaus bekannt, die Güte der Frontal-Crash Erkennung entweder durch so genannte UpFront-Satelliten oder durch andere Sensorprinzipien, wie etwa als Crash Impact Sound Sensor (CISS) bekannte körperschallempfindliche Sensoren, zu verbessern.

Ein CISS kann zur Verbesserung der Güte der Frontal-Crash Erkennung als wiederum auf der Platine der ACU angeordneter Haupt-Safing-Sensor eingesetzt werden. Da CISS bzw. die körperschallempfindliche Sensorik jedoch ein sehr neues Sensorprinzip mit noch hohem Entwicklungspotential und geringem Erfahrungsschatz im Feldeinsatz darstellt, werden CISS heutzutage für gewöhnlich kaum in Fahrzeugen verbaut.

Zur Verbesserung der Güte der Frontal-Crash Erkennung eingesetzte UpFront-Satelliten, teilweise auch als Frühaufprallerkennungssatelliten (Early Crash Satellites; ECS) bezeichnet, sind im Motorraum bzw. im Vorbau beispielsweise im Bereich der Stoßstange angeordnet und verwenden die selben in Richtung der x-Achse angeordneten Beschleunigungssensoren, wie der Beschleunigungssensor der ACU. UpFront-Satelliten haben gegenüber CISS den Nachteil höherer Kosten, durch separate Gehäuse, zusätzlichen Verkabelungsaufwand mit der ACU und zusätzlichen Installationsaufwand im Bereich der Fahrzeugfront verursacht werden. Weitere Kostennachteile ergeben sich durch die schwierigeren Umgebungsbedingungen im Motorraum, wie beispielsweise einer höheren Umgebungstemperatur von bis zu 125°C, um nur eine zu nennen. Abhängig vom Aufbau bzw. der Konfiguration des Fahrzeugs ist entweder ein UpFront-Satellit in der Mitte im Bereich der Stoßstange oder zwei UpFront-Satelliten links und rechts im Bereich der Stoßstange vorgesehen.

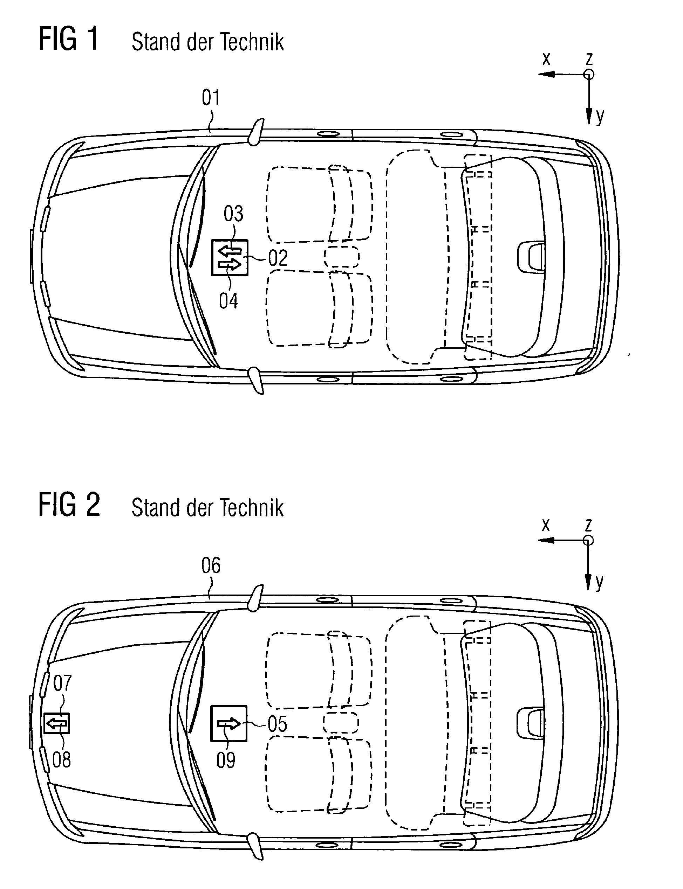

Beispiele für unterschiedliche, oben beschriebene Sensoranordnungen zur Frontal-Crash Erkennung für ein Rückhaltesystem in einem PKW sind in den Fig. 1 bis 6 dargestellt.

Fig. 1 zeigt ein erstes Beispiel einer Sensoranordnung zur Frontal-Crash Erkennung für ein Rückhaltesystem in einem PKW 01. Die Sensoranordnung besteht aus einer ACU 02 mit einem als Haupt-Sensor 03 zur Frontal-Crash Erkennung vorgesehenen, Beschleunigungen in Richtung der x-Achse erfassenden ersten mikromechanischen Beschleunigungssensor 03 und einem als Sicherungs-Sensor 04 zur Plausibilisierung der Frontal-Crash Erkennung vorgesehenen, Beschleunigungen in Richtung der negativen x-Achse erfassenden zweiten mikromechanischen Beschleunigungssensor 04. Haupt-Sensor 03 und Sicherungs-Sensor 04 sind dabei in die ACU 02 integriert.

Fig. 2 zeigt ein zweites Beispiel einer Sensoranordnung zur Frontal-Crash Erkennung für ein Rückhaltesystem in einem PKW 06. Die Sensoranordnung umfasst einen mittig im Bereich der Stoßstange des PKW 06 angeordneten UpFront-Satelliten 07 bzw. ECS 07 mit einem als Haupt-Sensor 08 zur Frontal-Crash Erkennung vorgesehenen, Beschleunigungen in Richtung der x-Achse erfassenden ersten mikromechanischen Beschleunigungssensor 08, sowie eine ACU 05 mit darin integriertem, als Sicherungs-Sensor 09 zur Plausibilisierung der Frontal-Crash Erkennung vorgesehenen, Beschleunigungen in Richtung der negativen x-Achse erfassenden, zweiten mikromechanischen Beschleunigungssensor 09.

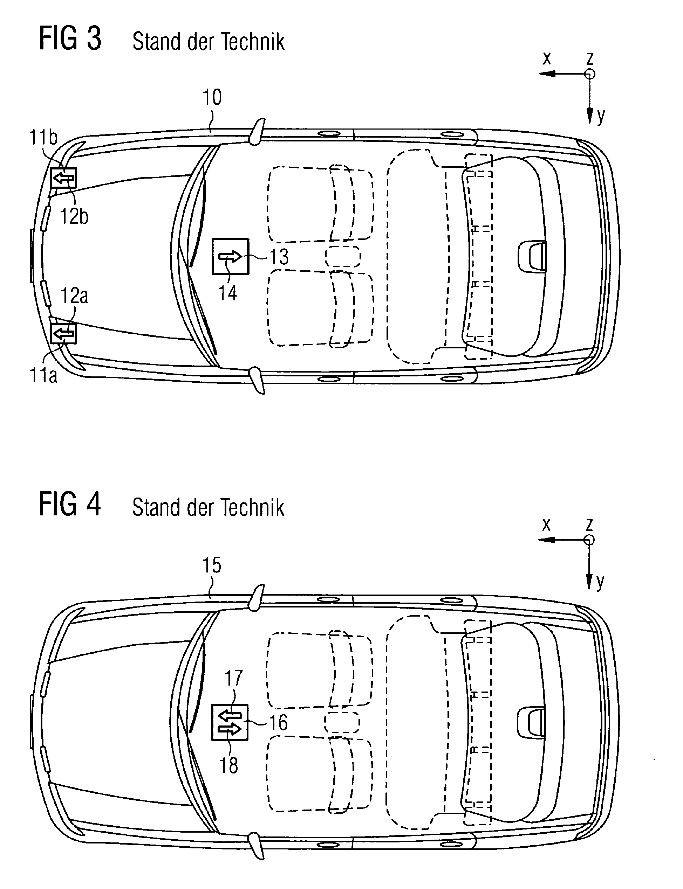

Fig. 3 zeigt ein drittes Beispiel einer Sensoranordnung zur Frontal-Crash Erkennung für ein Rückhaltesystem in einem PKW 10. Die Sensoranordnung umfasst eine ACU 13 und zwei links und rechts im Bereich der Stoßstange angeordnete UpFront-Satelliten 11a, 11b bzw. ECS 11a, 11b. Die UpFront-Satelliten 11a, 11b bzw. ECS 11a, 11b umfassen jeweils einen als Haupt-Sensor 12a, 12b zur Frontal-Crash Erkennung vorgesehenen, Beschleunigungen in Richtung der x-Achse erfassenden ersten mikromechanischen Beschleunigungssensor 12a, 12b. In die ACU 13 ist ein als Sicherungs-Sensor 14 zur Plausibilisierung der Frontal-Crash Erkennung vorgesehener, Beschleunigungen in Richtung der negativen x-Achse erfassender, zweiter mikromechanischer Beschleunigungssensor 14 integriert.

Fig. 4 zeigt ein viertes Beispiel einer Sensoranordnung zur Frontal-Crash Erkennung für ein Rückhaltesystem in einem PKW 15. Die Sensoranordnung besteht aus einer ACU 16 mit einem als Haupt-Sensor 17 zur Frontal-Crash Erkennung vorgesehenen, Beschleunigungen in Richtung der x-Achse erfassenden mikromechanischen CISS 17 und einem als Sicherungs-Sensor 18 zur Plausibilisierung der Frontal-Crash Erkennung vorgesehenen, Beschleunigungen in Richtung der negativen x-Achse erfassenden mikromechanischen Beschleunigungssensor 18. Haupt-Sensor 17 und Sicherungs-Sensor 18 sind dabei in die ACU 16 integriert.

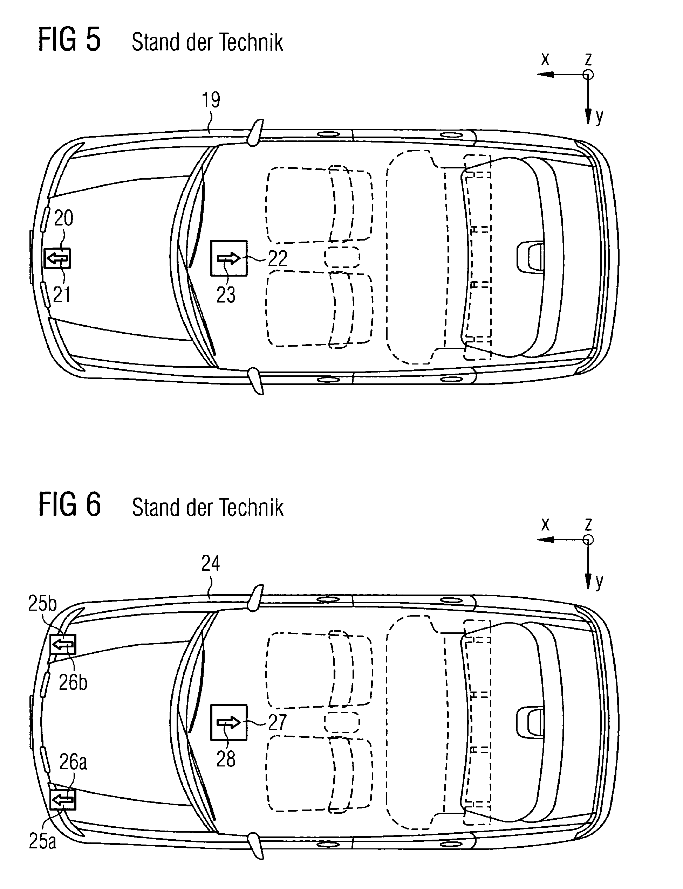

Fig. 5 zeigt ein fünftes Beispiel einer Sensoranordnung zur Frontal-Crash Erkennung für ein Rückhaltesystem in einem PKW 19. Die Sensoranordnung umfasst einen mittig im Bereich der Stoßstange des PKW 19 angeordneten UpFront-Satelliten 20 bzw. ECS 20 mit darin integriertem, als Haupt-Sensor 21 zur Frontal-Crash Erkennung vorgesehenen, in Richtung der x-Achse messenden mikromechanischen CISS 21, sowie eine ACU 22 mit darin integriertem, als Sicherungs-Sensor 23 zur Plausibilisierung der Frontal-Crash Erkennung vorgesehenen, Beschleunigungen in Richtung der negativen x-Achse erfassenden mikromechanischen Beschleunigungssensor 23.

Fig. 6 zeigt ein sechstes Beispiel einer Sensoranordnung zur Frontal-Crash Erkennung für ein Rückhaltesystem in einem PKW 24. Die Sensoranordnung umfasst eine ACU 27 und zwei links und rechts im Bereich der Stoßstange angeordnete UpFront-Satelliten 25a, 25b bzw. ECS 25a, 25b. Die UpFront-Satelliten 25a, 25b bzw. ECS 25a, 25b umfassen jeweils einen als Haupt-Sensor 26a, 26b zur Frontal-Crash Erkennung vorgesehenen, in Richtung der x-Achse messenden mikromechanischen CISS 26a, 26b. In die ACU 27 ist ein als Sicherungs-Sensor 28 zur Plausibilisierung der Frontal-Crash Erkennung vorgesehener, Beschleunigungen in Richtung der negativen x-Achse erfassender, mikromechanischer Beschleunigungssensor 28 integriert.

Grundsätzlich sind auch andere, die beschriebenen Sensorarten verwendende Sensoranordnungen zur Frontal-Crash Erkennung denkbar.

Zur Heckaufprall bzw. Rear-Crash Erkennung wird typischerweise dieselbe Sensoranordnung wie zur Frontalaufprall-Erkennung verwendet.

Zur Seitenaufprall bzw. Side-Crash Erkennung werden entweder im Bereich des Fahrzeugbodens an den Säulen angeordnete Beschleunigungssensoren oder in den Türen des Fahrzeugs angeordnete Drucksensoren verwendet. Um beide in Form von so genannten Side-Crash Satelliten im Fahrzeug verbaute Arten von Sensoren vor Umwelteinflüssen zu schützen, sind diese typischerweise auf in einem Gehäuse beherbergten Platinen mit darauf angeordnetem elektronischen Schaltkreis angeordnet. Im Fall eines mit einem Beschleunigungssensor ausgestatteten Side-Crash Satelliten spricht man von einem so genannten gSat, wohingegen man bei einem mit einem Drucksensor ausgestatteten Side-Crash Satelliten von einem so genannten pSat spricht.

Im Falle eines Seitenaufpralls, bei dem eine Fahrzeugtür, in der ein pSat angeordnet ist, getroffen bzw. deformiert wird, misst der Drucksensor eine der Veränderung des in der Tür eingeschlossenen Volumens proportionale Druckänderung gegenüber dem Umgebungsdruck.

Abhängig vom Aufbau der Fahrzeugseite und der Fahrzeuglänge sind heutzutage verschiedene Kombinationen der genannten Arten von Satelliten im Einsatz. Zur Sicherung bzw. Plausibilisierung kann beispielsweise ein auf der Platine der ACU angeordneter, Beschleunigungen in Richtung der y-Achse quer zur Fahrtrichtung des Fahrzeugs aufnehmender Beschleunigungssensor vorgesehen sein.

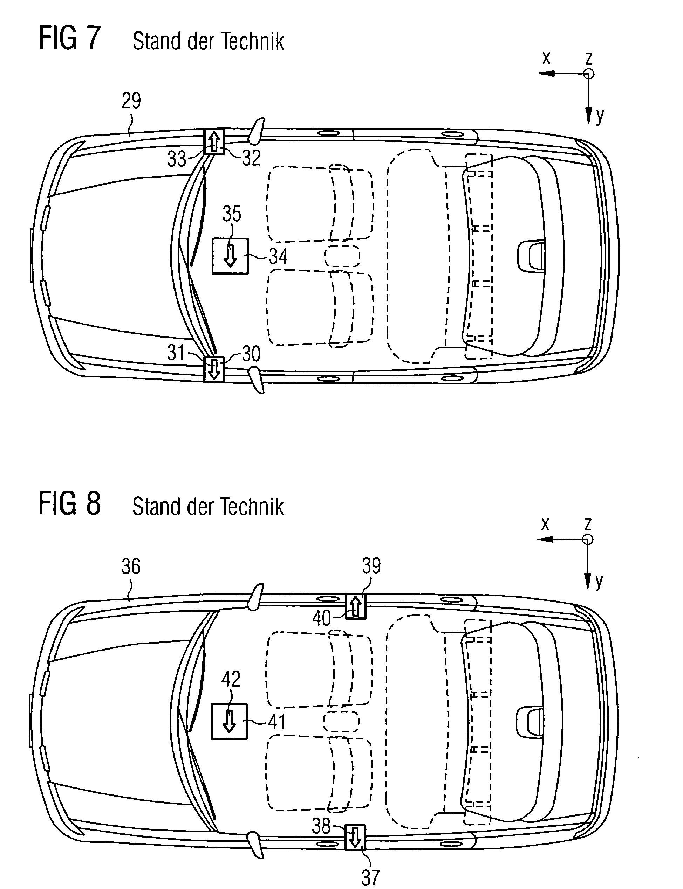

Beispiele für unterschiedliche, oben beschriebene Sensoranordnungen zur Seitenaufprall bzw. Side-Crash Erkennung für ein Rückhaltesystem in einem PKW sind in den Fig. 7 bis 16 dargestellt.

Fig. 7 zeigt ein erstes Beispiel einer Sensoranordnung zur Side-Crash Erkennung für ein Rückhaltesystem in einem PKW 29. Die Sensoranordnung besteht aus einem auf der Fahrerseite im Bereich der A-Säule des PKW 29 angeordneten Satelliten 30 in Form eines gSat 30 mit einem als Hauptsensor 31 zur Side-Crash Erkennung auf der Fahrerseite vorgesehenen, Beschleunigungen in Richtung der y-Achse quer zur Fahrtrichtung erfassenden mikromechanischen Beschleunigungssensor 31, einem auf der Beifahrerseite im Bereich der A-Säule des PKW 29 angeordneten Satelliten 32 in Form eines gSat 32 mit einem als Hauptsensor 33 zur Side-Crash Erkennung auf der Beifahrerseite vorgesehenen, Beschleunigungen in Richtung der negativen y-Achse quer zur Fahrtrichtung erfassenden mikromechanischen Beschleunigungssensor 33, sowie einem in der ACU 34 angeordneten, als Sicherungs-Sensor 35 zur Plausibilisierung der Side-Crash Erkennung vorgesehenen, Beschleunigungen in Richtung der y-Achse erfassenden mikromechanischen Beschleunigungssensor 35. Der in der ACU 34 angeordnete Beschleunigungssensor 35 kann auch in Richtung der negativen y-Achse orientiert sein. In diesem Fall liefert der Sensor negative Signale im Vergleich zu einer Orientierung in Richtung der positiven y-Achse. Auch können die beiden gSats 30, 32 in entgegengesetzte Richtungen orientiert sein und dann negative Signale zeigen.

Fig. 8 zeigt ein zweites Beispiel einer Sensoranordnung zur Side-Crash Erkennung für ein Rückhaltesystem in einem PKW 36. Die Sensoranordnung besteht aus einem auf der Fahrerseite im Bereich der B-Säule des PKW 36 angeordneten Satelliten 37 in Form eines gSat 37 mit einem als Hauptsensor 38 zur Side-Crash Erkennung auf der Fahrerseite vorgesehenen, Beschleunigungen in Richtung der y-Achse quer zur Fahrtrichtung erfassenden mikromechanischen Beschleunigungssensor 38, einem auf der Beifahrerseite im Bereich der B-Säule des PKW 36 angeordneten Satelliten 39 in Form eines gSat 39 mit einem als Hauptsensor 40 zur Side-Crash Erkennung auf der Beifahrerseite vorgesehenen, Beschleunigungen in Richtung der negativen y-Achse quer zur Fahrtrichtung erfassenden mikromechanischen Beschleunigungssensor 40, sowie einem in der ACU 41 angeordneten, als Sicherungs-Sensor 42 zur Plausibilisierung der Side-Crash Erkennung vorgesehenen, Beschleunigungen in Richtung der y-Achse erfassenden mikromechanischen Beschleunigungssensor 42. Der in der ACU 41 angeordnete Beschleunigungssensor 42 kann auch in Richtung der negativen y-Achse orientiert sein. In diesem Fall liefert der Sensor negative Signale im Vergleich zu einer Orientierung in Richtung der positiven y-Achse. Auch hier können die beiden gSats 37, 39 in entgegengesetzte Richtungen orientiert sein und dann negative Signale zeigen.

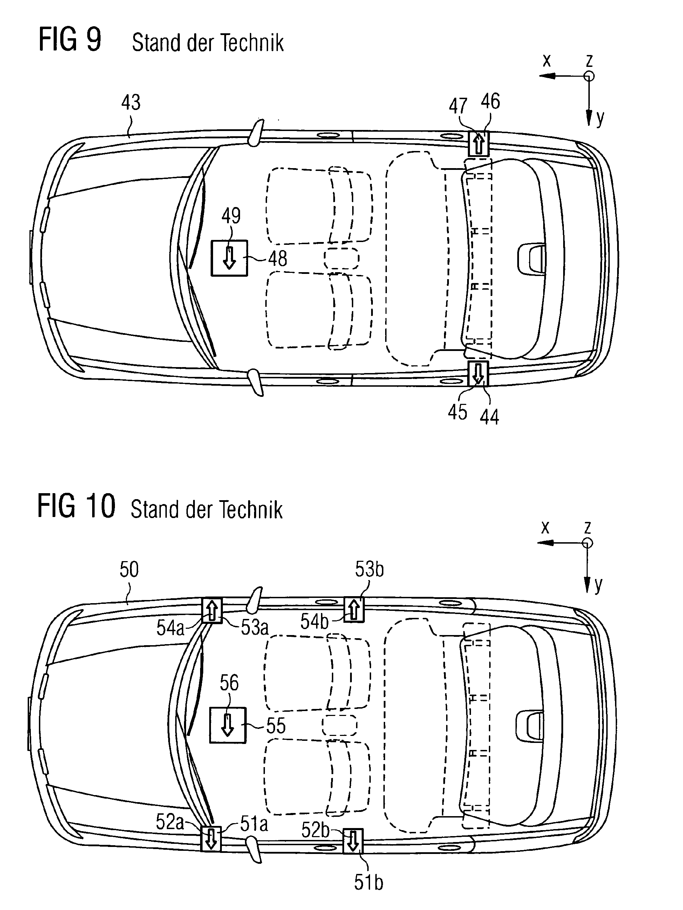

Fig. 9 zeigt ein drittes Beispiel einer Sensoranordnung zur Side-Crash Erkennung für ein Rückhaltesystem in einem PKW 43. Die Sensoranordnung besteht aus einem auf der Fahrerseite im Bereich der C-Säule des PKW 43 angeordneten Satelliten 44 in Form eines gSat 44 mit einem als Hauptsensor 45 zur Side-Crash Erkennung auf der Fahrerseite vorgesehenen, Beschleunigungen in Richtung der y-Achse quer zur Fahrtrichtung erfassenden mikromechanischen Beschleunigungssensor 45, einem auf der Beifahrerseite im Bereich der C-Säule des PKW 43 angeordneten Satelliten 46 in Form eines gSat 46 mit einem als Hauptsensor 47 zur Side-Crash Erkennung auf der Beifahrerseite vorgesehenen, Beschleunigungen in Richtung der negativen y-Achse quer zur Fahrtrichtung erfassenden mikromechanischen Beschleunigungssensor 47, sowie einem in der ACU 48 angeordneten, als Sicherungs-Sensor 49 zur Plausibilisierung der Side-Crash Erkennung vorgesehenen, Beschleunigungen in Richtung der y-Achse erfassenden mikromechanischen Beschleunigungssensor 49. Der in der ACU 48 angeordnete Beschleunigungssensor 49 kann auch in Richtung der negativen y-Achse orientiert sein. In diesem Fall liefert der Sensor negative Signale im Vergleich zu einer Orientierung in Richtung der positiven y-Achse. Wiederum können die beiden gSats 44, 46 in entgegengesetzte Richtungen orientiert sein und dann negative Signale zeigen.

Fig. 10 zeigt ein viertes Beispiel einer Sensoranordnung zur Side-Crash Erkennung für ein Rückhaltesystem in einem PKW 50. Die Sensoranordnung besteht aus auf der Fahrerseite im Bereich der A- und B-Säule des PKW 50 angeordneten Satelliten 51a, 51b in Form von gSats 51a, 51b, welche jeweils einen als Hauptsensor 52a, 52b zur Side-Crash Erkennung auf der Fahrerseite vorgesehenen, Beschleunigungen in Richtung der y-Achse quer zur Fahrtrichtung erfassenden mikromechanischen Beschleunigungssensor 52a, 52b aufweisen, auf der Beifahrerseite im Bereich der A- und B-Säule des PKW 50 angeordneten Satelliten 53a, 53b in Form von gSats 53a, 53b, welche jeweils einen als Hauptsensor 54a, 54b zur Side-Crash Erkennung auf der Beifahrerseite vorgesehenen, Beschleunigungen in Richtung der negativen y-Achse quer zur Fahrtrichtung erfassenden mikromechanischen Beschleunigungssensor 54a, 54b aufweisen, sowie einem in der ACU 55 angeordneten, als Sicherungs-Sensor 56 zur Plausibilisierung der Side-Crash Erkennung vorgesehenen, Beschleunigungen in Richtung der y-Achse erfassenden mikromechanischen Beschleunigungssensor 56. Der in der ACU 55 angeordnete Beschleunigungssensor 56 kann auch in Richtung der negativen y-Achse orientiert sein. In diesem Fall liefert der Sensor negative Signale im Vergleich zu einer Orientierung in Richtung der positiven y-Achse. Auch können die gSats 51a, 51b, 53a, 53b in entgegengesetzte Richtungen orientiert sein und dann negative Signale zeigen.

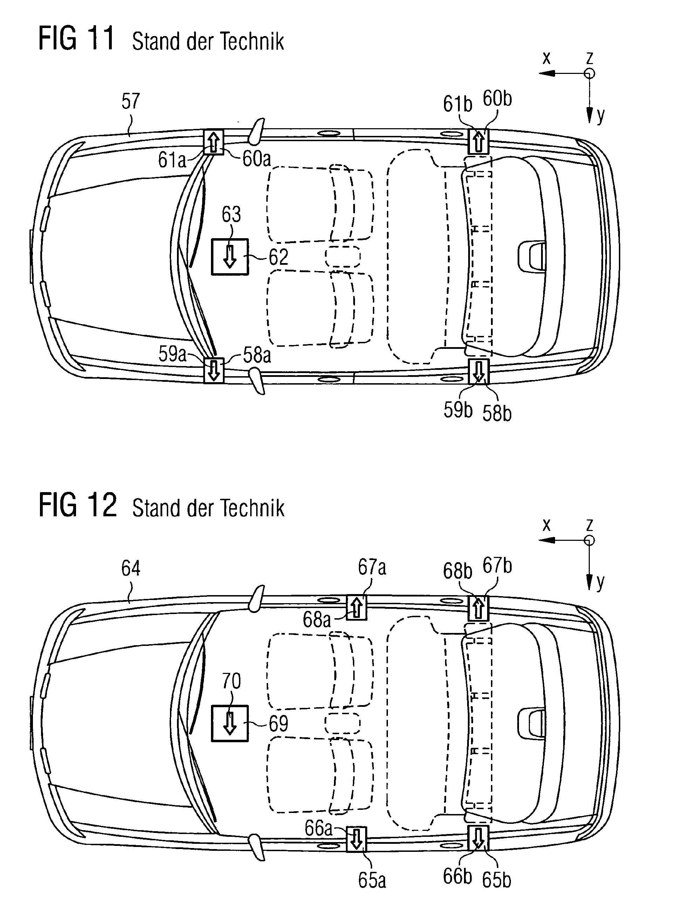

Fig. 11 zeigt ein fünftes Beispiel einer Sensoranordnung zur Side-Crash Erkennung für ein Rückhaltesystem in einem PKW 57. Die Sensoranordnung besteht aus auf der Fahrerseite im Bereich der A- und C-Säule des PKW 57 angeordneten Satelliten 58a, 58b in Form von gSats 58a, 58b, welche jeweils einen als Hauptsensor 59a, 59b zur Side-Crash Erkennung auf der Fahrerseite vorgesehenen, Beschleunigungen in Richtung der y-Achse quer zur Fahrtrichtung erfassenden mikromechanischen Beschleunigungssensor 59a, 59b aufweisen, auf der Beifahrerseite im Bereich der A- und C-Säule des PKW 57 angeordneten Satelliten 60a, 60b in Form von gSats 60a, 60b, welche jeweils einen als Hauptsensor 61a, 61b zur Side-Crash Erkennung auf der Beifahrerseite vorgesehenen, Beschleunigungen in Richtung der negativen y-Achse quer zur Fahrtrichtung erfassenden mikromechanischen Beschleunigungssensor 61a, 61b aufweisen, sowie einem in der ACU 62 angeordneten, als Sicherungs-Sensor 63 zur Plausibilisierung der Side-Crash Erkennung vorgesehenen, Beschleunigungen in Richtung der y-Achse erfassenden mikromechanischen Beschleunigungssensor 63. Der in der ACU 62 angeordnete Beschleunigungssensor 63 kann auch in Richtung der negativen y-Achse orientiert sein. In diesem Fall liefert der Sensor negative Signale im Vergleich zu einer Orientierung in Richtung der positiven y-Achse. Hier können wiederum die gSats 58a, 58b, 60a, 60b in entgegengesetzte Richtungen orientiert sein und dann negative Signale zeigen.

Fig. 12 zeigt ein sechstes Beispiel einer Sensoranordnung zur Side-Crash Erkennung für ein Rückhaltesystem in einem PKW 64. Die Sensoranordnung besteht aus auf der Fahrerseite im Bereich der B- und C-Säule des PKW 64 angeordneten Satelliten 65a, 65b in Form von gSats 65a, 65b, welche jeweils einen als Hauptsensor 66a, 66b zur Side-Crash Erkennung auf der Fahrerseite vorgesehenen, Beschleunigungen in Richtung der y-Achse quer zur Fahrtrichtung erfassenden mikromechanischen Beschleunigungssensor 66a, 66b aufweisen, auf der Beifahrerseite im Bereich der B- und C-Säule des PKW 64 angeordneten Satelliten 67a, 67b in Form von gSats 67a, 67b, welche jeweils einen als Hauptsensor 68a, 68b zur Side-Crash Erkennung auf der Beifahrerseite vorgesehenen, Beschleunigungen in Richtung der negativen y-Achse quer zur Fahrtrichtung erfassenden mikromechanischen Beschleunigungssensor 68a, 68b aufweisen, sowie einem in der ACU 69 angeordneten, als Sicherungs-Sensor 70 zur Plausibilisierung der Side-Crash Erkennung vorgesehenen, Beschleunigungen in Richtung der y-Achse erfassenden mikromechanischen Beschleunigungssensor 70. Der in der ACU 69 angeordnete Beschleunigungssensor 70 kann wiederum auch in Richtung der negativen y-Achse orientiert sein. In diesem Fall liefert der Sensor negative Signale im Vergleich zu einer Orientierung in Richtung der positiven y-Achse. Wiederum können die gSats 65a, 65b, 67a, 67b in entgegengesetzte Richtungen orientiert sein und dann negative Signale zeigen.

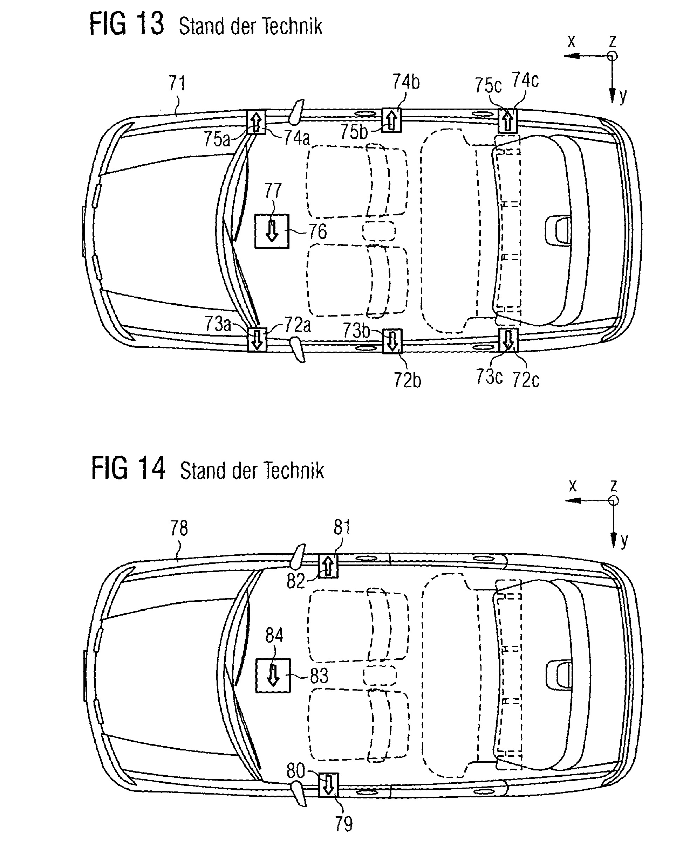

Fig. 13 zeigt ein siebtes Beispiel einer Sensoranordnung zur Side-Crash Erkennung für ein Rückhaltesystem in einem PKW 71. Die Sensoranordnung besteht aus auf der Fahrerseite im Bereich der A-, B- und C-Säule des PKW 71 angeordneten Satelliten 72a, 72b, 72c in Form von gSats 72a, 72b, 72c, welche jeweils einen als Hauptsensor 73a, 73b, 73c zur Side-Crash Erkennung auf der Fahrerseite vorgesehenen, Beschleunigungen in Richtung der y-Achse quer zur Fahrtrichtung erfassenden mikromechanischen Beschleunigungssensor 73a, 73b, 73c aufweisen, auf der Beifahrerseite im Bereich der A-, B- und C-Säule des PKW 71 angeordneten Satelliten 74a, 74b, 74c in Form von gSats 74a, 74b, 74c, welche jeweils einen als Hauptsensor 75a, 75b, 75c zur Side-Crash Erkennung auf der Beifahrerseite vorgesehenen, Beschleunigungen in Richtung der negativen y-Achse quer zur Fahrtrichtung erfassenden mikromechanischen Beschleunigungssensor 75a, 75b, 75c aufweisen, sowie einem in der ACU 76 angeordneten, als Sicherungs-Sensor 77 zur Plausibilisierung der Side-Crash Erkennung vorgesehenen, Beschleunigungen in Richtung der y-Achse erfassenden mikromechanischen Beschleunigungssensor 77. Der in der ACU 76 angeordnete Beschleunigungssensor 77 kann wiederum auch in Richtung der negativen y-Achse orientiert sein. In diesem Fall liefert der Sensor negative Signale im Vergleich zu einer Orientierung in Richtung der positiven y-Achse. Hier können die gSats 72a, 72b, 72c, 74a, 74b, 74c ebenso in entgegengesetzte Richtungen orientiert sein und dann negative Signale zeigen.

Fig. 14 zeigt ein achtes Beispiel einer Sensoranordnung zur Side-Crash Erkennung für ein Rückhaltesystem in einem PKW 78. Die Sensoranordnung besteht aus einem auf der Fahrerseite in der vorderen Fahrzeugtür des PKW 78 angeordneten Satelliten 79 in Form eines pSat 79 mit einem als Hauptsensor 80 zur Side-Crash Erkennung auf der Fahrerseite vorgesehenen Drucksensor 80, einem auf der Beifahrerseite in der vorderen Fahrzeugtür des PKW 78 angeordneten Satelliten 81 in Form eines pSat 81 mit einem als Hauptsensor 82 zur Side-Crash Erkennung auf der Beifahrerseite vorgesehenen Drucksensor 82, sowie einem in der ACU 83 angeordneten, als Sicherungs-Sensor 84 zur Plausibilisierung der Side-Crash Erkennung vorgesehenen, Beschleunigungen in Richtung der y-Achse erfassenden mikromechanischen Beschleunigungssensor 84. Der in der ACU 83 angeordnete Beschleunigungssensor 84 kann auch in Richtung der negativen y-Achse orientiert sein. In diesem Fall liefert der Sensor negative Signale im Vergleich zu einer Orientierung in Richtung der positiven y-Achse.

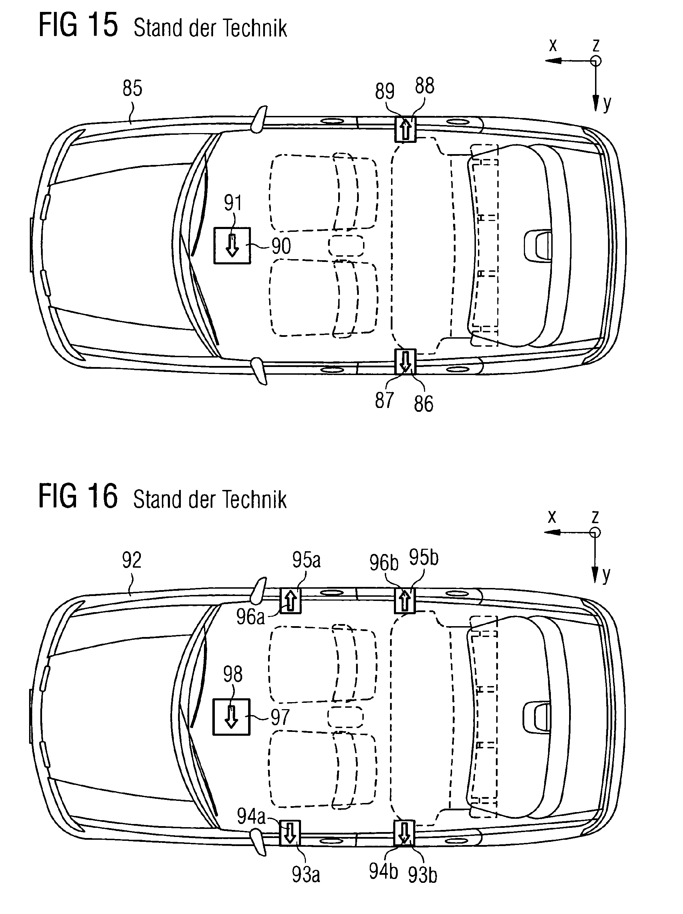

Fig. 15 zeigt ein neuntes Beispiel einer Sensoranordnung zur Side-Crash Erkennung für ein Rückhaltesystem in einem PKW 85. Die Sensoranordnung besteht aus einem auf der Fahrerseite in der hinteren Fahrzeugtür des PKW 85 angeordneten Satelliten 86 in Form eines pSat 86 mit einem als Hauptsensor 87 zur Side-Crash Erkennung auf der Fahrerseite vorgesehenen Drucksensor 87, einem auf der Beifahrerseite in der hinteren Fahrzeugtür des PKW 85 angeordneten Satelliten 88 in Form eines pSat 88 mit einem als Hauptsensor 89 zur Side-Crash Erkennung auf der Beifahrerseite vorgesehenen Drucksensor 89, sowie einem in der ACU 90 angeordneten, als Sicherungs-Sensor 91 zur Plausibilisierung der Side-Crash Erkennung vorgesehenen, Beschleunigungen in Richtung der y-Achse erfassenden mikromechanischen Beschleunigungssensor 91. Der in der ACU 90 angeordnete Beschleunigungssensor 91 kann wiederum auch in Richtung der negativen y-Achse orientiert sein. In diesem Fall liefert der Sensor negative Signale im Vergleich zu einer Orientierung in Richtung der positiven y-Achse.

Fig. 16 zeigt ein zehntes Beispiel einer Sensoranordnung zur Side-Crash Erkennung für ein Rückhaltesystem in einem PKW 92. Die Sensoranordnung besteht aus auf der Fahrerseite in den vorderen und hinteren Fahrzeugtüren des PKW 92 angeordneten Satelliten 93a, 93b in Form von pSats 93a, 93b mit jeweils einem als Hauptsensor 94a, 94b zur Side-Crash Erkennung auf der Fahrerseite vorgesehenen Drucksensor 94a, 94b, auf der Beifahrerseite in den vorderen und hinteren Fahrzeugtüren des PKW 92 angeordneten Satelliten 95a, 95b in Form von pSats 95a, 95b mit jeweils einem als Hauptsensor 96a, 96b zur Side-Crash Erkennung auf der Beifahrerseite vorgesehenen Drucksensor 96a, 96b, sowie einem in der ACU 97 angeordneten, als Sicherungs-Sensor 98 zur Plausibilisierung der Side-Crash Erkennung vorgesehenen, Beschleunigungen in Richtung der y-Achse erfassenden mikromechanischen Beschleunigungssensor 98. Der in der ACU 97 angeordnete Beschleunigungssensor 98 kann ebenfalls auch in Richtung der negativen y-Achse orientiert sein. In diesem Fall liefert der Sensor negative Signale im Vergleich zu einer Orientierung in Richtung der positiven y-Achse.

Auch hierbei sind weitere Kombinationen unter Verwendung von gSats und pSats für Sensoranordnungen zur Seitencrasherkennung denkbar, wobei nicht alle Kombinationen in PKWs Verwendung finden. Bei Fahrzeugen mit ungewöhnlichem Aufbau, wie etwa so genannte Sport-Utility-Vehicles (SUVs) mit D-Säule sind ebenso andere Kombinationen denkbar.

Eine Entscheidung, welche Kombination von Sensoren ausreichend ist für eine Sensoranordnung für eins Seitencrasherkennung ist weitestgehend vom Fahrzeugaufbau und von der Fahrzeuglänge abhängig. Anstelle von in der ACU angeordneten mikromechanischen Beschleunigungssensoren, die Beschleunigungen in Richtung der y-Achse erfassen und messen, ist außerdem denkbar, einen auf der gegenüberliegende Fahrzeugseite angeordneten gSat zur Plausibilisierung zu verwenden. Grundsätzlich wird auch der Einsatz von CISS zur Seitenaufprall bzw. Side-Crash Erkennung diskutiert.

Im Falle eines als Offset-Crash bekannten, versetzten Frontal-Crashs, sowie eines auch als Angular-Frontal-Crash bezeichneten Schrägaufpralls ist eine eindeutige Unterscheidung von zur Auslösung eines Rückhaltemittels, wie etwa eines oder mehrerer Airbags, führenden, so genannten Offset- bzw. Angular-Deployment-Crashs gegenüber nicht zu einer Auslösung führenden, so genannten Non-Deployment-Crashs mittels der zur Frontal-Crash verwendeten Sensoranordnung schwierig. Zur Erfassung des Einflusses bzw. Anteils des Offsets bzw. Aufprallwinkels an den Sensorsignalen ist es üblich, einen auf der Platine der ACU angeordneten, Beschleunigungen in Richtung der y-Achse erfassenden mikromechanischen Beschleunigungssensor zu verwenden.

Darüber hinaus wird es mehr und mehr üblich, einen als Haupt-sensor vorgesehenen Beschleunigungssensor auf höhere Messbereiche von bis zu 250g auszulegen. Eine verdrehte Anordnung des Beschleunigungssensors um beispielsweise 45° verdreht gegenüber der x- und y-Achse erlaubt es, dass in Richtung der x- und y-Achse jeweils ein Anteil von bis zu etwa 70% des Messbereichs entsprechende Beschleunigungen erfasst werden kann.

Zur Erkennung eines auch als Rollover bezeichneten Überschlags werden typischerweise auf der Platine der ACU angeordnete Drehratensensoren als Hauptsensoren verwendet, welche die zeitliche Änderung der Neigung des Fahrzeugs erfassen. Als Sicherungs-Sensoren sind Beschleunigungen in Richtung der z-Achse des Fahrzeugs erfassende Beschleunigungssensoren mit einem typischerweise auf 10g beschränkten Messbereich vorgesehen.

Außerdem wird es mehr und mehr üblich, die zur Erkennung von Rollovern vorgesehenen Sensoren mit den Sensoren für Fahrstabilitätsprogramme (ESP) zu kombinieren, da die hierfür vorgesehenen Sensoren und elektronischen Schaltkreise idealerweise an der selben Stelle im Fahrzeug verbaut werden sollten.

Die aus PKWs bekannten Sensoranordnungen für Rückhaltesysteme können meist auf kleinere L-LKWs übertragen werden, wobei typischerweise weniger Sensoren benötigt werden, da die Fahrgastzelle bzw. das Führerhaus im Vergleich zu PKWs bzw. zu überwiegend zur Personenbeförderung vorgesehenen Fahrzeugen kleiner ist. So weisen viele Nutzfahrzeuge, auch solche, die auf PKWs oder PKW ähnlichen Fahrzeugen basieren, häufig keine Rückbank auf. Die verwendete Sensoranordnung hängt wiederum vom Aufbau des Führerhauses des L-LKWs ab, wobei üblicherweise kostengünstige Sensoranordnungen zum Einsatz kommen.

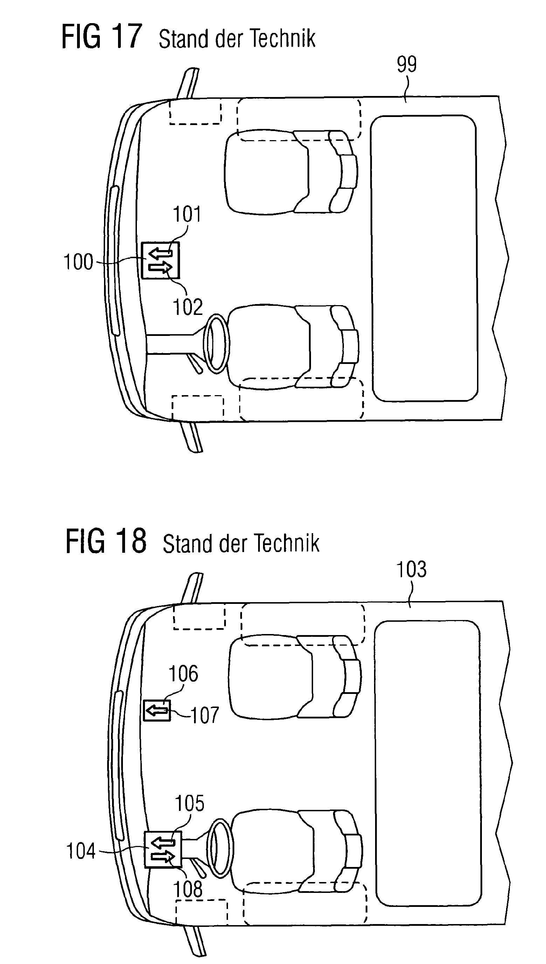

Bei größeren L-Lkws kommen bislang nur Sensoranordnungen zur Erkennung von Frontal-Crashs zum Einsatz. Andere Unfall- bzw. Aufprallarten werden bei dieser Fahrzeuggattung bislang nicht berücksichtigt. In den Fig. 17 und 18 ist jeweils eine in einem Führerhaus bzw. eine Fahrgastzelle 99, 103 eines größeren L-LKWs angeordnete Sensoranordnung zur Erkennung eines Frontal-Crashs für ein Rückhaltesystem in dem L-LKW dargestellt. Die dargestellten Sensoranordnungen umfassen jeweils einen in der ACU 100, 104 integrierten, Beschleunigungen in Richtung der x-Achse aufnehmenden mikromechanischen Beschleunigungssensor 101, 105 als Haupt-Sensor 101, 105, sowie einen weiteren in die ACU 100, 104 integrierten, Beschleunigungen in Richtung der negativen x-Achse aufnehmenden mikromechanischen Beschleunigungssensor 102, 108 als Sicherungs-Sensor 102, 108.

Ist die ACU 100 wie in Fig. 17 dargestellt in der Fahrgastzelle 99 im Bereich des Mitteltunnels am Fahrzeugrahmen angeordnet, ist der oben beschriebene Aufbau der vollständige Aufbau der Sensoranordnung.

Ist die ACU 104 wie in Fig. 18 dargestellt auf der Fahrerseite der Fahrgastzelle 103, beispielsweise im Bereich des Armaturenbretts verbaut, kommt ein auf der Beifahrerseite am Fahrzeugrahmen angeordneter UpFront-Satellit 106 mit einem Beschleunigungen in Richtung der x-Achse aufnehmenden mikromechanischen Beschleunigungssensor 107 als zweiter Hauptsensor 107 zum Einsatz. Dieser ist ähnlich einem gSat ausgeführt.

Bei schweren Nutzfahrzeugen muss zunächst zwischen LKWs und Bussen unterschieden werden. In LKWs sind ACUs nur als Option erhältlich. Eine solche ACU umfasst einen integrierten, Beschleunigungen in Richtung der x-Achse aufnehmenden mikromechanischen Beschleunigungssensor als Hauptsensor sowie einem ebenso in die ACU integrierten, Beschleunigungen in Richtung der negativen x-Achse aufnehmenden mikromechanischen Beschleunigungssensor zur Plausibilisierung.

In Bussen sind noch keine Sensoranordnungen im Einsatz, die zur Erkennung und/oder Unterscheidung eines oben beschriebenen Aufpralls geeignet sind.

Insbesondere den schwereren L-LKWs, den LKWs und den Bussen ist gemein, dass sie keinen Vorbau mit darin integriertem Motorraum aufweisen, was eine Erkennung und/oder Unterscheidung zwischen den oben beschriebenen Aufprallarten mit den bisherigen Sensoranordnungen erschwert bzw. unter vertretbarem Kostenaufwand nicht ermöglicht.

Als eine Aufgabe der Erfindung kann es deshalb angesehen werden, eine kostengünstige Sensoranordnung für ein Rückhaltesystem in einem Nutzfahrzeug zu entwickeln, welche eine zuverlässige Erkennung und/oder Unterscheidung zwischen unterschiedlichen Aufprall- bzw. Crash-Arten ermöglicht.

Die Aufgabe wird gelöst durch die Merkmale des Anspruchs 1.

Eine Sensoranordnung für ein Rückhaltesystem in einem Fahrzeug, insbesondere einem Nutzfahrzeug, wie etwa einem Leicht-LKW, einem LKW, einem Bus, bei dem die Seitentüren der Fahrgastkabine bzw. des Führerhauses unmittelbar an denjenigen Bereich angrenzen, in dem das Fahrzeug im Fall eines Frontal-Crashs, eines Offset-Crashs oder eines Angular-Frontal-Crashs getroffen wird, umfasst eine Airbag-Kontroll-Einheit (ACU; Airbag Control Unit) mit mindestens einem darin integrierten, Beschleunigungen in Richtung der x-Achse erfassenden Beschleunigungssensor. Gemäß einem ersten Gegenstand der Erfindung umfasst die Sensoranordnung in den Seiten- bzw. Vordertüren angeordnete Aufprallsensoren in Form von den Luftdruck in der jeweiligen Seitentür erfassenden Drucksensoren bzw. Drucksensor-Satelliten bzw. pSats, welche als Sicherungs-Sensoren zur Plausibilisierung eines Frontal-Crashs und/oder Offset-Crashs und/oder Angular-Frontal-Crashs vorgesehen sind.

Diese Aufprallsensoren werden erfindungsgemäß für eine bessere Unterscheidung von verschiedenen Arten von Frontalunfällen bzw. Frontal-Crashes verwendet und tragen außerdem zu einer Verbesserung der Sicherheitsstrategie und zur Plausibilisierung bei. Demgegenüber werden nach dem Stand der Technik beispielsweise in den Seitentüren eines Fahrzeugs angeordnete Aufprallsensoren insbesondere in Form von Drucksensoren bzw. Drucksensor-Satelliten bzw. pSats ausschließlich zur Seitenaufprall bzw. Seiten-Crash Detektion verwendet.

Bei allen Fahrzeugen, welche keinen Vorbau beispielsweise in Form eines Motorraums vor der Fahrgastkabine bzw. dem Führerhaus aufweisen, befinden sich die A-Säulen unmittelbar hinter bzw. auf Höhe der Fahrzeugfront. Dadurch befinden sich auch die Seitentüren der Fahrgastkabine bzw. des Führerhauses nahe desjenigen Bereichs, in dem das Fahrzeug im Fall eines Frontal-Crashs, eines Offset-Crashs oder eines Angular-Frontal-Crashs getroffen wird. Die Erfindung nutzt auf vorteilhafte Weise diese insbesondere von Nutzfahrzeugen bekannte Eigenschaft.

Eine vorteilhafte Ausgestaltung der Erfindung sieht vor, dass die in den Seitentüren angeordneten, den Luftdruck in der jeweiligen Seitentür erfassenden Drucksensoren zusätzlich als Hauptsensoren zur Side-Crash Erkennung vorgesehen sind.

Vorzugsweise ist in der ACU mindestens ein weiterer, Beschleunigungen in Richtung der y-Achse erfassender, als Sensor zur Offset-Crash und/oder Angular-Frontal-Crash Erkennung und/oder als Sicherungs-Sensor zur Side-Crash Erkennung vorgesehener Beschleunigungssensor angeordnet.

Eine besonders vorteilhafte Ausgestaltung der Erfindung sieht vor, dass die Sensoranordnung eine ACU mit:
einem in der ACU angeordneten, als Haupt-Sensor zur Frontal- und Rear-Crash Erkennung vorgesehenen, Beschleunigungen von vorzugsweise mindestens das gegenüber einem PKW höhere Gewicht berücksichtigenden 125 g in Richtung der x-Achse in Fahrzeuglängsrichtung bzw. in Fahrtrichtung erfassenden, vorzugsweise mikromechanischen Beschleunigungssensor,
einem ebenfalls in der ACU angeordneten, zur Plausibilisierung der Frontal- und Rear-Crash Erkennung vorgesehenen, Beschleunigungen von zur Plausibilitätsprüfung ausreichenden, vorzugsweise mindestens 70 g in Richtung der negativen x-Achse entgegen der Fahrzeuglängsrichtung bzw. entgegen der Fahrtrichtung erfassenden, vorzugsweise mikromechanischen Beschleunigungssensor,
einem auch in der ACU angeordneten, als Sensor zur Offset-Crash und/oder Angular-Frontal-Crash Erkennung und als Sicherungs-Sensor zur Side-Crash Erkennung vorgesehenen, Beschleunigungen von vorzugsweise mindestens 70 g in Richtung der y-Achse quer zur Fahrzeuglängsrichtung bzw. Fahrtrichtung erfassenden, vorzugsweise mikromechanischen Beschleunigungssensor
umfasst, sowie jeweils mindestens einen in jeder der beiden Seitentüren des Nutzfahrzeugs angeordneten, den Luftdruck in der jeweiligen Seitentür erfassenden Drucksensor, als Haupt-sensor zur Side-Crash Erkennung und als Plausibilisierungs- bzw. Sicherungs-Sensor zur Offset-Crash und/oder Angular-Frontal-Crash Erkennung.

Eine andere, besonders vorteilhafte Ausgestaltung der Erfindung sieht vor, dass die Sensoranordnung:
einen als Haupt-Sensor zur Frontal- und Rear-Crash Erkennung sowie als Sicherungs-Sensor zur Side-Crash Erkennung und als Sicherungs-Sensor zur Offset-Crash und/oder Angular-Frontal-Crash Erkennung vorgesehenen, vorzugsweise auf der Platine der ACU angeordneten und um 45° gegenüber der x-Achse gedrehten Beschleunigungssensor mit einem sowohl das höhere Fahrzeuggewicht eines Nutzfahrzeugs gegenüber einem PKW, als auch die 45°-Drehung berücksichtigenden Messbereich von vorzugsweise mindestens 250 g,
einen als Sicherungs-Sensor zur Frontal- und Rear-Crash Erkennung sowie als zweiter Sicherungs-Sensor zur Side-Crash Erkennung vorgesehenen, vorzugsweise auf der Platine der ACU angeordneten und um 45° oder 225° gegenüber der x-Achse gedrehten Beschleunigungssensor mit einem sowohl das höhere Fahrzeuggewicht des Nutzfahrzeugs gegenüber einem PKW, als auch die 45° oder 225°-Drehung berücksichtigenden Messbereich von vorzugsweise mindestens 125 g, sowie
jeweils mindestens einen in jeder der beiden Seitentüren des Nutzfahrzeugs angeordneten, den Luftdruck in der jeweiligen Seitentür erfassenden Drucksensor, als Haupt-sensor zur Side-Crash Erkennung und als Plausibilisierungs- bzw. Sicherungs-Sensor zur Offset-Crash und/oder Angular-Frontal-Crash Erkennung
umfasst.

Vorzugsweise wird ein digitaler Sensor mit zwei unabhängigen Messzellen verwendet, die sich gegenseitig absichern bzw-"safen".

Eine zusätzliche vorteilhafte Ausgestaltung der Erfindung sieht vor, dass die Sensoranordnung:
einen als Haupt-Sensor zur Frontal- und Rear-Crash Erkennung sowie als Sicherungs-Sensor zur Side-Crash Erkennung und als Sicherungs-Sensor zur Offset-Crash und/oder Angular-Frontal-Crash Erkennung vorgesehenen, vorzugsweise auf der Platine der ACU angeordneten und um 45° gegenüber der x-Achse gedrehten Beschleunigungssensor mit einem sowohl das höhere Fahrzeuggewicht eines Nutzfahrzeugs gegenüber einem PKW, als auch die 45°-Drehung berücksichtigenden Messbereich von vorzugsweise mindestens 250 g,
einen in der ACU angeordneten, als Sicherungs-Sensor zur Frontal- und Rear-Crash Erkennung vorgesehenen, Beschleunigungen in Richtung der positiven oder negativen x-Achse in Fahrzeuglängsrichtung bzw. in Fahrtrichtung erfassenden, vorzugsweise mikromechanischen Beschleunigungssensor, sowie
jeweils mindestens einen in jeder der beiden Seitentüren des Nutzfahrzeugs angeordneten, den Luftdruck in der jeweiligen Seitentür erfassenden Drucksensor, als Haupt-sensor zur Side-Crash Erkennung und als Plausibilisierungs- bzw. Sicherungs-Sensor zur Offset-Crash und/oder Angular-Frontal-Crash Erkennung
umfasst. Eine zusätzliche Erfassung von Beschleunigungen in Richtung der y-Achse ist hierbei nicht erforderlich, da dies bereits durch den ersten Beschleunigungssensor dieser Sensoranordnung abgedeckt ist, der in Bezug auf Beschleunigungen in Richtung der y-Achse als Sicherungs-Sensor dient.

Vorzugsweise dienen die in den Seitentüren des Nutzfahrzeugs angeordneten, den Luftdruck in der jeweiligen Seitentür erfassenden Drucksensoren als Sicherungs-Sensoren zur Frontal-Crash Erkennung, wobei zumindest ein in der ACU angeordneter, Beschleunigungen in Richtung der x-Achse erfassender Beschleunigungssensor als Haupt-Sensor dient.

Die Sensoranordnung kann mindestens einen zusätzlichen Drehratensensor als Hauptsensor zur Erkennung eines auch als Rollover bezeichneten Überschlags umfassen, der vorzugsweise auf der Platine der ACU angeordnet ist und die zeitliche Änderung der Neigung des Fahrzeugs von vorzugsweise 300°/s erfasst.

Vorzugsweise umfasst die Sensoranordnung einen Beschleunigungen in Richtung der z-Achse des Fahrzeugs erfassende Beschleunigungssensor, mit einem typischerweise auf 10g beschränkten Messbereich, als Sicherungs-Sensor zur Überschlags-Erkennung.

Eine vorteilhafte Ausgestaltung der Erfindung sieht vor, dass in der ACU mindestens ein weiterer, Beschleunigungen in Richtung der negativen x-Achse erfassender Beschleunigungssensor als Sicherungs-Sensor zur Plausibilisierung eines Frontal-Crashs angeordnet ist.

Eine Sensoranordnung für ein Rückhaltesystem in einem Fahrzeug, insbesondere einem Nutzfahrzeug, wie etwa einem Leicht-LKW, einem LKW, einem Bus, bei dem die Seitentüren der Fahrgastkabine bzw. des Führerhauses unmittelbar an denjenigen Bereich angrenzen, in dem das Fahrzeug im Fall eines Frontal-Crashs, eines Offset-Crashs oder eines Angular-Frontal-Crashs getroffen wird, mit einer ACU mit mindestens einem darin integrierten, Beschleunigungen in Richtung der x-Achse erfassenden Beschleunigungssensor umfasst gemäß einem zweiten Gegenstand der Erfindung mindestens einen weiteren, in der ACU angeordneten, Beschleunigungen in Richtung der y-Achse erfassenden Beschleunigungssensor, als Sensor zur Offset-Crash und/oder Angular-Frontal-Crash Erkennung und/oder als Sicherungs-Sensor zur Side-Crash Erkennung.

Vorzugsweise umfasst die Sensoranordnung
einen in der ACU angeordneten, Beschleunigungen von vorzugsweise mindestens das gegenüber einem PKW höhere Gewicht berücksichtigenden 125 g in Richtung der x-Achse in Fahrzeuglängsrichtung bzw. in Fahrtrichtung erfassenden, vorzugsweise mikromechanischen Beschleunigungssensor als Haupt-Sensor zur Frontal-Crash Erkennung,
einen ebenfalls in der ACU angeordneten, Beschleunigungen von zur Plausibilitätsprüfung ausreichenden, vorzugsweise mindestens 70 g in Richtung der negativen x-Achse entgegen der Fahrzeuglängsrichtung bzw. entgegen der Fahrtrichtung erfassenden, vorzugsweise mikromechanischen Beschleunigungssensor zur Plausibilisierung der Frontal-Crash Erkennung, sowie
einen auch in der ACU angeordneten, Beschleunigungen von vorzugsweise mindestens 70 g in Richtung der y-Achse quer zur Fahrzeuglängsrichtung bzw. Fahrtrichtung erfassenden, vorzugsweise mikromechanischen Beschleunigungssensor als Sensor zur Erkennung von bzw. Unterscheidung zwischen Offset-Crashs und/oder Angular-Frontal-Crashs.

Eine vorteilhafte Ausgestaltung der Erfindung sieht vor, dass die Sensoranordnung zusätzlich mindestens einen in Form eines Satelliten außerhalb der ACU angeordneten, Beschleunigungen in Richtung der x-Achse in Fahrzeuglängsrichtung bzw. in Fahrtrichtung erfassenden, vorzugsweise mikromechanischen Beschleunigungssensor als Haupt-Sensor zur Frontal-Crash Erkennung aufweist.

Die Erfindung wird nachfolgend anhand von in den Zeichnungen dargestellten Ausführungsbeispielen näher erläutert. Dabei zeigen:
- Fig. 1: eine erste Sensoranordnung zur Frontal-Crash Erkennung für ein Rückhaltesystem in einem PKW nach dem Stand der Technik.
- Fig. 2: eine zweite Sensoranordnung zur Frontal-Crash Erkennung für ein Rückhaltesystem in einem PKW nach dem Stand der Technik.
- Fig. 3: eine dritte Sensoranordnung zur Frontal-Crash Erkennung für ein Rückhaltesystem in einem PKW nach dem Stand der Technik.
- Fig. 4: eine vierte Sensoranordnung zur Frontal-Crash Erkennung für ein Rückhaltesystem in einem PKW nach dem Stand der Technik.
- Fig. 5: eine fünfte Sensoranordnung zur Frontal-Crash Erkennung für ein Rückhaltesystem in einem PKW nach dem Stand der Technik.
- Fig. 6: eine sechste Sensoranordnung zur Frontal-Crash Erkennung für ein Rückhaltesystem in einem PKW nach dem Stand der Technik.
- Fig. 7: eine erste Sensoranordnung zur Side-Crash Erkennung für ein Rückhaltesystem in einem PKW nach dem Stand der Technik.
- Fig. 8: eine zweite Sensoranordnung zur Side-Crash Erkennung für ein Rückhaltesystem in einem PKW nach dem Stand der Technik.
- Fig. 9: eine dritte Sensoranordnung zur Side-Crash Erkennung für ein Rückhaltesystem in einem PKW nach dem Stand der Technik.
- Fig. 10: eine vierte Sensoranordnung zur Side-Crash Erkennung für ein Rückhaltesystem in einem PKW nach dem Stand der Technik.
- Fig. 11: eine fünfte Sensoranordnung zur Side-Crash Erkennung für ein Rückhaltesystem in einem PKW nach dem Stand der Technik.
- Fig. 12: eine sechste Sensoranordnung zur Side-Crash Erkennung für ein Rückhaltesystem in einem PKW nach dem Stand der Technik.
- Fig. 13: eine siebte Sensoranordnung zur Side-Crash Erkennung für ein Rückhaltesystem in einem PKW nach dem Stand der Technik.
- Fig. 14: eine achte Sensoranordnung zur Side-Crash Erkennung für ein Rückhaltesystem in einem PKW nach dem Stand der Technik.
- Fig. 15: eine neunte Sensoranordnung zur Side-Crash Erkennung für ein Rückhaltesystem in einem PKW nach dem Stand der Technik.
- Fig. 16: eine zehnte Sensoranordnung zur Side-Crash Erkennung für ein Rückhaltesystem in einem PKW nach dem Stand der Technik.
- Fig. 17: eine erste Sensoranordnung zur Frontal-Crash Erkennung für ein Rückhaltesystem in einem Nutzfahrzeug nach dem Stand der Technik.
- Fig. 18: eine zweite Sensoranordnung zur Frontal-Crash Erkennung für ein Rückhaltesystem in einem Nutzfahrzeug nach dem Stand der Technik.
- Fig. 19: ein erstes Ausführungsbeispiel einer erfindungsgemäßen Sensoranordnung zur Erkennung von und Unterscheidung zwischen Frontal-Crashs, Offset-Crashs und Angular-Frontal-Crashs in einem Nutzfahrzeug.
- Fig. 20: ein zweites Ausführungsbeispiel einer erfindungsgemäßen Sensoranordnung zur Erkennung von und Unterscheidung zwischen Frontal-Crashs, Offset-Crashs und Angular-Frontal-Crashs in einem Nutzfahrzeug.
- Fig. 21: ein erstes Ausführungsbeispiel einer erfindungsgemäßen Sensoranordnung zur Erkennung von und Unterscheidung zwischen Frontal-Crashs, Offset-Crashs, Angular-Frontal-Crashs und Side-Crashs in einem Nutzfahrzeug.
- Fig. 22: ein zweites Ausführungsbeispiel einer erfindungsgemäßen Sensoranordnung zur Erkennung von und Unter- scheidung zwischen Frontal-Crashs, Offset-Crashs, Angular-Frontal-Crashs und Side-Crashs in einem Nutzfahrzeug.
- Fig. 23: ein drittes Ausführungsbeispiel einer erfindungsgemäßen Sensoranordnung zur Erkennung von und Unterscheidung zwischen Frontal-Crashs, Offset-Crashs, Angular-Frontal-Crashs und Side-Crashs in einem Nutzfahrzeug.
- Fig. 24: ein viertes Ausführungsbeispiel einer erfindungsgemäßen Sensoranordnung zur Erkennung von und Unterscheidung zwischen Frontal-Crashs, Offset-Crashs, Angular-Frontal-Crashs und Side-Crashs in einem Nutzfahrzeug.

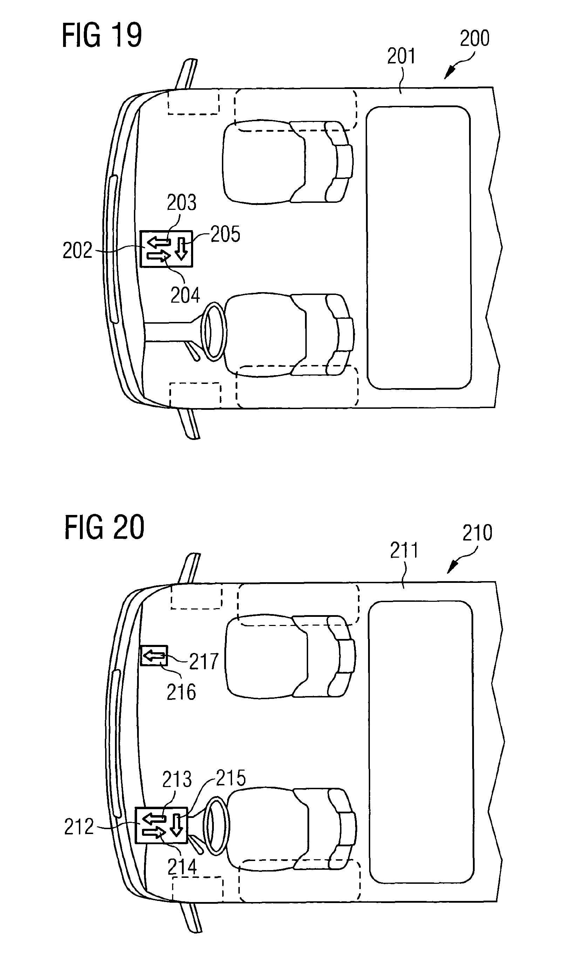

Eine in Fig. 19 dargestellte Sensoranordnung 200 zur Erkennung von und Unterscheidung zwischen Frontal-Crashs, Offset-Crashs und Angular-Frontal-Crashs in einem Nutzfahrzeug, wie etwa einem L-LKW, einem LKW oder einem Bus, umfasst:
einen in einer in der Fahrerkabine 201 bzw. dem Führerhaus beispielsweise im Bereich des Mitteltunnels untergebrachte Airbag-Kontroll-Einheit 202 (ACU; Airbag-Control-Unit) angeordneten, Beschleunigungen von vorzugsweise mindestens das gegenüber einem PKW höhere Gewicht eines Nutzfahrzeugs berücksichtigenden 125 g in Richtung der x-Achse in Fahrzeuglängsrichtung bzw. in Fahrtrichtung erfassenden, vorzugsweise mikromechanischen Beschleunigungssensor 203 als Haupt-Sensor 203 zur Frontal-Crash Erkennung,
einen ebenfalls in der ACU 202 angeordneten, Beschleunigungen von zur Plausibilitätsprüfung ausreichenden, vorzugsweise mindestens 70 g in Richtung der negativen x-Achse entgegen der Fahrzeuglängsrichtung bzw. entgegen der Fahrtrichtung erfassenden, vorzugsweise mikromechanischen Beschleunigungssensor 204 als Sicherungs-Sensor 204 zur Plausibilisierung der Frontal-Crash Erkennung, sowie
einen auch in der ACU 202 angeordneten, Beschleunigungen von vorzugsweise mindestens 70 g in Richtung der y-Achse quer zur Fahrzeuglängsrichtung bzw. Fahrtrichtung erfassenden, vorzugsweise mikromechanischen Beschleunigungssensor 205 als Haupt-Sensor 205 zur Erkennung von bzw. Unterscheidung zwischen Offset-Crashs und/oder Angular-Frontal-Crashs.

Wird die ACU unter der Fahrerkabine angeordnet, kann es zu einer Dämpfung der Signale kommen und damit zu einem fehlerhaften bzw. frühzeitigen Auslösen. Durch eine Anordnung der ACU in der Fahrerkabine wird dieses Problem vermieden.

Eine in Fig. 20 dargestellte Sensoranordnung 210 zur Erkennung von und Unterscheidung zwischen Frontal-Crashs, Offset-Crashs und Angular-Frontal-Crashs in einem Nutzfahrzeug umfasst ebenfalls:
einen in einer in der Fahrerkabine 211 bzw. dem Führerhaus beispielsweise im Bereich des Armaturenbretts untergebrachte ACU 212 angeordneten, Beschleunigungen von vorzugsweise mindestens das gegenüber einem PKW höhere Gewicht eines Nutzfahrzeugs berücksichtigenden 125 g in Richtung der x-Achse in Fahrzeuglängsrichtung bzw. in Fahrtrichtung erfassenden, vorzugsweise mikromechanischen Beschleunigungssensor 213 als Haupt-Sensor 213 zur Frontal-Crash Erkennung,
einen ebenfalls in der ACU 212 angeordneten, Beschleunigungen von zur Plausibilitätsprüfung ausreichenden, vorzugsweise mindestens 70 g in Richtung der negativen x-Achse entgegen der Fahrzeuglängsrichtung bzw. entgegen der Fahrtrichtung erfassenden, vorzugsweise mikromechanischen Beschleunigungssensor 214 als Sicherungs-Sensor 214 zur Plausibilisierung der Frontal-Crash Erkennung, sowie
einen auch in der ACU 212 angeordneten, Beschleunigungen von vorzugsweise mindestens 70 g in Richtung der y-Achse quer zur Fahrzeuglängsrichtung bzw. Fahrtrichtung erfassenden, vorzugsweise mikromechanischen Beschleunigungssensor 215 als Haupt-Sensor 215 zur Erkennung von bzw. Unterscheidung zwischen Offset-Crashs und/oder Angular-Frontal-Crashs.
Darüber hinaus weist die in Fig. 20 dargestellte Sensoranordnung 210 zusätzlich zu der in Fig. 19 dargestellten Sensoranordnung 200 einen in Form eines Satelliten 216, beispielsweise in Form eines UpFront-Satelliten 216, außerhalb der ACU 212 angeordneten, Beschleunigungen in Richtung der x-Achse in Fahrzeuglängsrichtung bzw. in Fahrtrichtung erfassenden, vorzugsweise mikromechanischen Beschleunigungssensor 217 als Haupt-Sensor 217 zur Frontal-Crash Erkennung auf. Der Grund hierfür ist, dass die ACU 212 unter dem Armaturenbrett und nicht im Bereich des Mitteltunnels angeordnet ist.

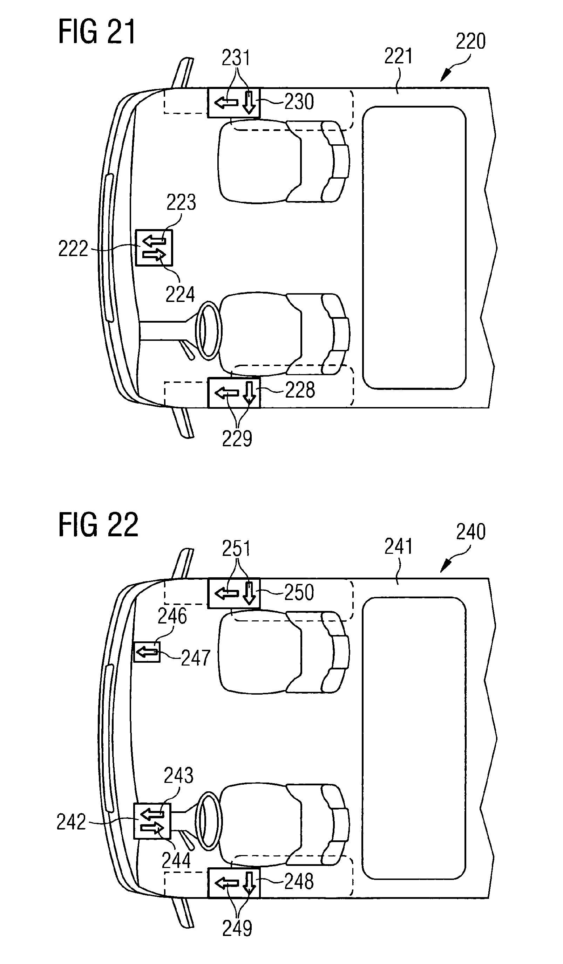

Bei den in den Fig. 21 bis 24 dargestellten Sensoranordnungen 220, 240, 260, 280 für Rückhaltesysteme in Nutzfahrzeugen, wie etwa Leicht-LKWs, LKWs, Busse, welche jeweils stellvertretend durch schematisch dargestellte Fahrerkabinen 221, 241, 261, 281 bzw. Führerhäuser dargestellt werden, sind erfindungsgemäß in den Vordertüren Aufprallsensoren 228, 230, 248, 250, 268, 270, 288, 290 in Form von vorzugsweise Drucksensor-Satelliten 228, 230, 248, 250, 268, 270, 288, 290 bzw. pSats 228, 230, 248, 250, 268, 270, 288, 290 mit den Luftdruck in der jeweiligen Seitentür erfassenden Drucksensoren 229, 231, 249, 251, 269, 271, 289, 291 angeordnet. Diese Aufprallsensoren 228, 230, 248, 250, 268, 270, 288, 290 bzw. Drucksensoren 229, 231, 249, 251, 269, 271, 289, 291 werden erfindungsgemäß für eine bessere Unterscheidung von verschiedenen Arten von Frontalunfällen bzw. Frontal-Crashes verwendet und tragen außerdem zu einer Verbesserung der Sicherheitsstrategie und zur Plausibilisierung bei. Demgegenüber werden nach dem Stand der Technik beispielsweise in den Seitentüren eines Kraftfahrzeugs (KFZ) angeordnete Aufprallsensoren insbesondere in Form von Drucksensoren bzw. Drucksensor-Satelliten bzw. pSats ausschließlich zur Seitenaufprall bzw. Seiten-Crash Detektion verwendet.

Den stellvertretend durch die Fahrerkabinen bzw. Führerhäuser 221, 241, 261, 281 in den Fig. 21 bis 24 dargestellten Fahrzeugen ist gemein, dass sie keinen Vorbau beispielsweise in Form eines Motorraums vor der Fahrgastkabine bzw. dem Führerhaus 221, 241, 261, 281 aufweisen. Bei diesen Fahrzeugen befinden sich die A-Säulen unmittelbar hinter bzw. auf Höhe der Fahrzeugfront. Dadurch befinden sich auch die Seitentüren der Fahrgastkabinen bzw. der Führerhäuser 221, 241, 261, 281 nahe desjenigen Bereichs, in dem diese Fahrzeuge im Fall eines Frontal-Crashs, eines Offset-Crashs oder eines Angular-Frontal-Crashs getroffen werden. Die Erfindung nutzt auf vorteilhafte Weise diese insbesondere von Nutzfahrzeugen bekannte Eigenschaft.

Bei einem derartigen Fahrzeug, bei dem sich die A-Säulen unmittelbar im Bereich der Fahrzeugfront befinden, genügt zur zuverlässigen Erkennung und Unterscheidung von Frontal-Crashes, Offset-Crashes oder Angular-Frontal-Crashes eine in Fig. 21 dargestellte Sensoranordnung umfassend eine ACU 222 mit:
einem in der ACU 222 angeordneten, als Haupt-Sensor 223 zur Frontal- und Rear-Crash Erkennung vorgesehenen, Beschleunigungen von vorzugsweise mindestens das gegenüber einem PKW höhere Gewicht berücksichtigenden 125 g in Richtung der x-Achse in Fahrzeuglängsrichtung bzw. in Fahrtrichtung erfassenden, vorzugsweise mikromechanischen Beschleunigungssensor 223,
einem ebenfalls in der ACU 222 angeordneten, als Sicherungs-Sensor 224 zur Plausibilisierung der Frontal- und Rear-Crash Erkennung vorgesehenen, Beschleunigungen von zur Plausibilitätsprüfung ausreichenden, vorzugsweise mindestens 70 g in Richtung der negativen x-Achse entgegen der Fahrzeuglängsrichtung bzw. entgegen der Fahrtrichtung erfassenden, vorzugsweise mikromechanischen Beschleunigungssensor 224,
zusätzlich sind in beiden Seitentüren der Fahrerkabine 221 bzw. des Führerhauses 221 des Nutzfahrzeugs jeweils ein als Hauptsensor zur Side-Crash Erkennung und als Plausibilisierungs- bzw. Sicherungs-Sensor zur Offset-Crash und/oder Angular-Frontal-Crash Erkennung vorgesehener pSat 228, 230 mit den Luftdruck erfassenden Drucksensoren 229, 231 angeordnet. Der mit dem Drucksensor 229 ausgestattete Side-Crash Satellit 228 bzw. pSat 228 ist dabei in der auf der Fahrerseite der Fahrerkabine 220 angeordneten Seitentür angeordnet und dient als Haupt-Sensor zur Side-Crash Erkennung auf der Fahrerseite. Der mit dem Drucksensor 231 ausgestattete Side-Crash Satellit 230 bzw. pSat 230 ist in der auf der Beifahrerseite der Fahrerkabine 220 angeordneten Seitentür angeordnet und dient als Haupt-Sensor zur Side-Crash Erkennung auf der Beifahrerseite.

Die in Fig. 22 dargestellte Sensoranordnung 240 ist wie folgt aufgebaut:
einem in der ACU 242 angeordneten, als Haupt-Sensor 243 zur Frontal- und Rear-Crash Erkennung vorgesehenen, Beschleunigungen von vorzugsweise mindestens das gegenüber einem PKW höhere Gewicht berücksichtigenden 125 g in Richtung der x-Achse in Fahrzeuglängsrichtung bzw. in Fahrtrichtung erfassenden, vorzugsweise mikromechanischen Beschleunigungssensor 243,
einem ebenfalls in der ACU 242 angeordneten, als Sicherungs-Sensor 244 zur Plausibilisierung der Frontal- und Rear-Crash Erkennung vorgesehenen, Beschleunigungen von zur Plausibilitätsprüfung ausreichenden, vorzugsweise mindestens 70 g in Richtung der negativen x-Achse entgegen der Fahrzeuglängsrichtung bzw. entgegen der Fahrtrichtung erfassenden, vorzugsweise mikromechanischen Beschleunigungssensor 244,
jeweils einem in beiden Seitentüren der Fahrerkabine 241 bzw. des Führerhauses des Nutzfahrzeugs angeordneter, als Hauptsensor zur Side-Crash Erkennung und als Plausibilisierungs- bzw. Sicherungs-Sensor zur Offset-Crash und/oder Angular-Frontal-Crash Erkennung vorgesehener pSat 248, 250 mit den Luftdruck erfassenden Drucksensoren 249, 251. Der mit dem Drucksensor 249 ausgestattete Side-Crash Satellit 248 bzw. pSat 248 ist dabei in der auf der Fahrerseite der Fahrerkabine 240 angeordneten Seitentür angeordnet und dient als Haupt-Sensor zur Side-Crash Erkennung auf der Fahrerseite. Der mit dem Drucksensor 251 ausgestattete Side-Crash Satellit 250 bzw. pSat 250 ist in der auf der Beifahrerseite der Fahrerkabine 240 angeordneten Seitentür angeordnet und dient als Haupt-Sensor zur Side-Crash Erkennung auf der Beifahrerseite.
Darüber hinaus weist die in Fig. 22 dargestellte Sensoranordnung 240 einen in Form eines Satelliten 246, beispielsweise in Form eines UpFront-Satelliten 246, außerhalb der ACU 242 angeordneten, Beschleunigungen in Richtung der x-Achse in Fahrzeuglängsrichtung bzw. in Fahrtrichtung erfassenden, vorzugsweise mikromechanischen Beschleunigungssensor 247 als Haupt-Sensor 247 zur Frontal-Crash Erkennung auf. Vorzugsweise ist die ACU 242 unter dem Armaturenbrett angeordnet und der UpFront Satellit 246 unter dem Armaturenbrett auf der Beifahrerseite.

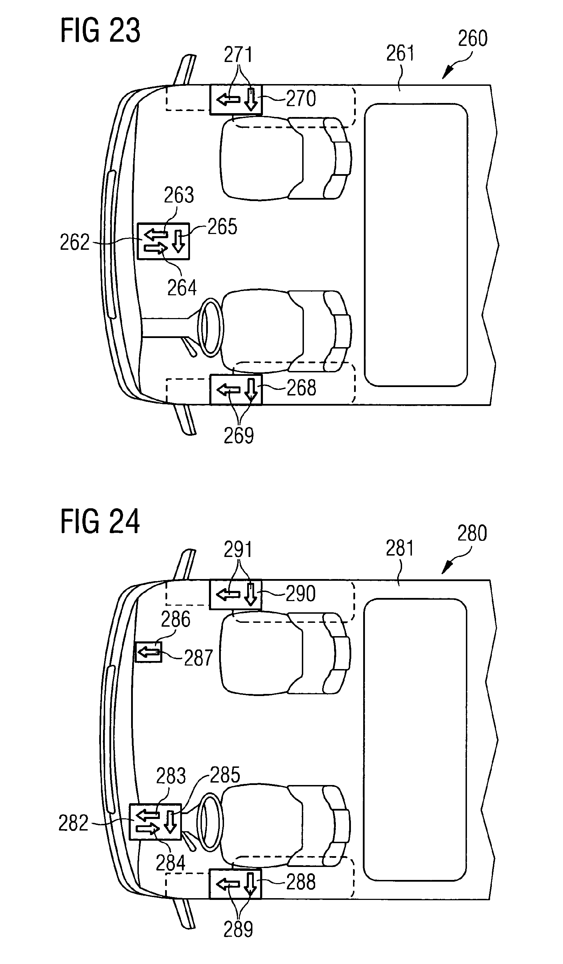

Die in Fig. 23 dargestellte erfindungsgemäße Sensoranordnung 260 umfasst eine ACU 262 mit:
einem in der ACU 262 angeordneten, als Haupt-Sensor 263 zur Frontal- und Rear-Crash Erkennung vorgesehenen, Beschleunigungen von vorzugsweise mindestens das gegenüber einem PKW höhere Gewicht berücksichtigenden 125 g in Richtung der x-Achse in Fahrzeuglängsrichtung bzw. in Fahrtrichtung erfassenden, vorzugsweise mikromechanischen Beschleunigungssensor 263,
einem ebenfalls in der ACU 262 angeordneten, als Sicherungs-Sensor 264 zur Plausibilisierung der Frontal- und Rear-Crash Erkennung vorgesehenen, Beschleunigungen von zur Plausibilitätsprüfung ausreichenden, vorzugsweise mindestens 70 g in Richtung der negativen x-Achse entgegen der Fahrzeuglängsrichtung bzw. entgegen der Fahrtrichtung erfassenden, vorzugsweise mikromechanischen Beschleunigungssensor 264,
einem auch in der ACU 262 angeordneten, als Haupt- oder Sicherungs-Sensor zur Offset-Crash und/oder Angular-Frontal-Crash Erkennung und als Sicherungs-Sensor zur Side-Crash Erkennung vorgesehenen, Beschleunigungen von vorzugsweise mindestens 70 g in Richtung der y-Achse quer zur Fahrzeuglängsrichtung bzw. Fahrtrichtung erfassenden, vorzugsweise mikromechanischen Beschleunigungssensor 265.
Zusätzlich ist in beiden Seitentüren der Fahrerkabine 261 des Nutzfahrzeugs jeweils ein als Hauptsensor zur Side-Crash Erkennung und als Plausibilisierungs- bzw. Sicherungs- oder Haupt-Sensor zur Offset-Crash und/oder Angular-Frontal-Crash Erkennung vorgesehener pSat 268, 270 mit den Luftdruck erfassenden Drucksensoren 269, 271 angeordnet. Der mit dem Drucksensor 269 ausgestattete Side-Crash Satellit 268 bzw. pSat 268 ist dabei in der auf der Fahrerseite der Fahrerkabine 260 angeordneten Seitentür angeordnet und dient als Haupt-Sensor zur Side-Crash Erkennung auf der Fahrerseite. Der mit dem Drucksensor 271 ausgestattete Side-Crash Satellit 270 bzw. pSat 270 ist in der auf der Beifahrerseite der Fahrerkabine 260 angeordneten Seitentür angeordnet und dient als Haupt-Sensor zur Side-Crash Erkennung auf der Beifahrerseite.

Die in Fig. 24 dargestellte erfindungsgemäße Sensoranordnung 280 umfasst eine ACU 282 mit:
einem in der ACU 282 angeordneten, als Haupt-Sensor 283 zur Frontal- und Rear-Crash Erkennung vorgesehenen, Beschleunigungen von vorzugsweise mindestens das gegenüber einem PKW höhere Gewicht berücksichtigenden 125 g in Richtung der x-Achse in Fahrzeuglängsrichtung bzw. in Fahrtrichtung erfassenden, vorzugsweise mikromechanischen Beschleunigungssensor 283,
einem ebenfalls in der ACU 282 angeordneten, als Sicherungs-Sensor 284 zur Plausibilisierung der Frontal- und Rear-Crash Erkennung vorgesehenen, Beschleunigungen von zur Plausibilitätsprüfung ausreichenden, vorzugsweise mindestens 70 g in Richtung der negativen x-Achse entgegen der Fahrzeuglängsrichtung bzw. entgegen der Fahrtrichtung erfassenden, vorzugsweise mikromechanischen Beschleunigungssensor 284,
einem auch in der ACU 282 angeordneten, als Haupt- oder Sicherungs-Sensor zur Offset-Crash und/oder Angular-Frontal-Crash Erkennung und als Sicherungs-Sensor zur Side-Crash Erkennung vorgesehenen, Beschleunigungen von vorzugsweise mindestens 70 g in Richtung der y-Achse quer zur Fahrzeuglängsrichtung bzw. Fahrtrichtung erfassenden, vorzugsweise mikromechanischen Beschleunigungssensor 285.
Zusätzlich ist in beiden Seitentüren der Fahrerkabine 281 des Nutzfahrzeugs jeweils ein als Hauptsensor zur Side-Crash Erkennung und als Plausibilisierungs- bzw. Sicherungs-Sensor zur Offset-Crash und/oder Angular-Frontal-Crash Erkennung vorgesehener pSat 288, 290 mit den Luftdruck erfassenden Drucksensoren 289, 291 angeordnet. Der mit dem Drucksensor 289 ausgestattete Side-Crash Satellit 288 bzw. pSat 288 ist dabei in der auf der Fahrerseite der Fahrerkabine 280 angeordneten Seitentür angeordnet und dient als Haupt-Sensor zur Side-Crash Erkennung auf der Fahrerseite. Der mit dem Drucksensor 291 ausgestattete Side-Crash Satellit 290 bzw. pSat 290 ist in der auf der Beifahrerseite der Fahrerkabine 280 angeordneten Seitentür angeordnet und dient als Haupt-Sensor zur Side-Crash Erkennung auf der Beifahrerseite.
Darüber hinaus weist die in Fig. 24 dargestellte Sensoranordnung 280 einen in Form eines Satelliten 286, beispielsweise in Form eines UpFront-Satelliten 286, außerhalb der ACU 282 angeordneten, Beschleunigungen in Richtung der x-Achse in Fahrzeuglängsrichtung bzw. in Fahrtrichtung erfassenden, vorzugsweise mikromechanischen Beschleunigungssensor 287 als Haupt-Sensor 287 zur Frontal-Crash Erkennung auf. Vorzugsweise ist die ACU 282 unter dem Armaturenbrett angeordnet und der UpFront Satellit 286 unter dem Armaturenbrett auf der Beifahrerseite.

## Patentansprüche

1. Sensoranordnung (220, 240, 260, 280) für ein Rückhaltesystem in einem Fahrzeug, insbesondere einem Nutzfahrzeug, bei dem die Seitentüren der Fahrgastkabine bzw. des Führerhauses (221, 241, 261, 281) unmittelbar an denjenigen Bereich angrenzen, in dem das Fahrzeug im Fall eines Frontal-Crashs, eines Offset-Crashs oder eines Angular-Frontal-Crashs getroffen wird, umfassend eine Airbag-Kontroll-Einheit (ACU; Airbag Control Unit) (222, 242, 262, 282) mit mindestens einem darin integrierten, Beschleunigungen in Richtung der x-Achse erfassenden Beschleunigungssensor (223, 224, 243, 244, 263, 264, 283, 284),
**dadurch gekennzeichnet,**
**dass** in den Seitentüren mindestens jeweils ein Aufprallsensor (228, 230, 248, 250, 268, 270, 288, 290) in Form eines den Luftdruck in der jeweiligen Seitentür erfassenden Drucksensors (229, 231, 249, 251, 269, 271, 289, 291) angeordnet ist, zumindest als Sicherungs-Sensor (229, 231, 249, 251, 269, 271, 289, 291) zur Plausibilisierung eines Frontal-Crashs und/oder Offset-Crashs und/oder Angular-Frontal-Crashs.

2. Sensoranordnung nach Anspruch 1,
**dadurch gekennzeichnet,**
**dass** die in den Seitentüren angeordneten, den Luftdruck in der jeweiligen Seitentür erfassenden Drucksensoren (229, 231, 249, 251, 269, 271, 289, 291) zusätzlich als Hauptsensoren (229, 231, 249, 251, 269, 271, 289, 291) zur Side-Crash Erkennung vorgesehen sind.

3. Sensoranordnung nach Anspruch 1 oder 2,
**dadurch gekennzeichnet,**
**dass** in der ACU (262, 282) mindestens ein weiterer, Beschleunigungen in Richtung der y-Achse erfassender, als Sensor zur Offset-Crash und/oder Angular-Frontal-Crash Erkennung und/oder als Sicherungs-Sensor zur Side-Crash Erkennung vorgesehener Beschleunigungssensor (265, 285) angeordnet ist.

4. Sensoranordnung nach Anspruch 1, 2 oder 3,
**dadurch gekennzeichnet,**
**dass** die Sensoranordnung (260):
einen in der ACU (262) angeordneten, Beschleunigungen in Richtung der x-Achse erfassenden Beschleunigungssensor (263) als Haupt-Sensor (263) zur Frontal- und Rear-Crash Erkennung,
einen in der ACU (262) angeordneten, Beschleunigungen in Richtung der negativen x-Achse erfassenden Beschleunigungssensor (264) als Sicherungs-Sensor (264) zur Plausibilisierung der Frontal- und Rear-Crash Erkennung,
einen in der ACU (262) angeordneten, Beschleunigungen in Richtung der y-Achse erfassenden Beschleunigungssensor (265) als Sensor zur Offset-Crash und/oder Angular-Frontal-Crash Erkennung und als Sicherungs-Sensor zur Side-Crash Erkennung,
sowie jeweils mindestens einen in jeder der beiden Seitentüren des Nutzfahrzeugs angeordneten, den Luftdruck in der jeweiligen Seitentür erfassenden Drucksensor (269, 271), als Hauptsensor zur Side-Crash Erkennung und als Plausibilisierungs- bzw. Sicherungs- Sensor zur Offset-Crash und/oder Angular-Frontal-Crash Erkennung
umfasst.

5. Sensoranordnung nach Anspruch 1, 2 oder 3,
**dadurch gekennzeichnet,**
**dass** die Sensoranordnung:
einen als Haupt-Sensor zur Frontal- und Rear-Crash Erkennung sowie als Sicherungs-Sensor zur Side-Crash Erkennung und als Sicherungs-Sensor zur Offset-Crash und/oder Angular-Frontal-Crash Erkennung vorgesehenen, um 45° gegenüber der x-Achse gedrehten Beschleunigungssensor,
einen als Sicherungs-Sensor zur Frontal- und Rear-Crash Erkennung sowie als zweiter Sicherungs-Sensor zur Side-Crash Erkennung vorgesehenen, um 45° oder 225° gegenüber der x-Achse gedrehten Beschleunigungssensor, sowie jeweils mindestens einen in jeder der beiden Seitentüren des Nutzfahrzeugs angeordneten, den Luftdruck in der jeweiligen Seitentür erfassenden Drucksensor (229, 231, 249, 251, 269, 271, 289, 291), als Hauptsensor zur Side-Crash Erkennung und als Plausibilisierungs- bzw. Sicherungs- oder Haupt-Sensor zur Offset-Crash und/oder Angular-Frontal-Crash Erkennung
umfasst.

6. Sensoranordnung nach Anspruch 1, 2 oder 3,
**dadurch gekennzeichnet,**
**dass** die Sensoranordnung:
einen als Haupt-Sensor zur Frontal- und Rear-Crash Erkennung sowie als Sicherungs-Sensor zur Side-Crash Erkennung und als Sicherungs-Sensor zur Offset-Crash und/oder Angular-Frontal-Crash Erkennung vorgesehenen, um 45° gegenüber der x-Achse gedrehten Beschleunigungssensor,
einen in der ACU angeordneten, als Sicherungs-Sensor zur Frontal- und Rear-Crash Erkennung vorgesehenen, Beschleunigungen in Richtung der x-Achse in Fahrzeuglängsrichtung erfassenden Beschleunigungssensor, sowie jeweils mindestens einen in jeder der beiden Seitentüren des Nutzfahrzeugs angeordneten, den Luftdruck in der jeweiligen Seitentür erfassenden Drucksensor (229, 231, 249, 251, 269, 271, 289, 291), als Hauptsensor zur Side-Crash Erkennung und als Plausibilisierungs- bzw. Sicherungs-Sensor zur Offset-Crash und/oder Angular-Frontal-Crash Erkennung
umfasst.

7. Sensoranordnung nach einem der Ansprüche 4, 5 oder 6,
**dadurch gekennzeichnet,**
**dass** die in den Seitentüren des Nutzfahrzeugs angeordneten, den Luftdruck in der jeweiligen Seitentür erfassenden Drucksensoren (229, 231, 249, 251, 269, 271, 289, 291) als Sicherungs-Sensoren zur Frontal-Crash Erkennung dienen, wobei zumindest ein in der ACU (222, 242, 262, 282) angeordneter, Beschleunigungen in Richtung der x-Achse erfassender Beschleunigungssensor (223, 224, 243, 244, 263, 264, 283, 284) als Haupt-Sensor dient.

8. Sensoranordnung nach einem der vorhergehenden Ansprüche,
**dadurch gekennzeichnet,**
**dass** die Sensoranordnung mindestens einen zusätzlichen Drehratensensor als Hauptsensor zur Erkennung eines Überschlags umfasst.

9. Sensoranordnung nach Anspruch 8,
**dadurch gekennzeichnet,**
**dass** die Sensoranordnung einen Beschleunigungen in Richtung der z-Achse des Fahrzeugs erfassenden Beschleunigungssensor umfasst, als Sicherungs-Sensor zur Überschlags-Erkennung.

10. Sensoranordnung nach einem der vorhergehenden Ansprüche,
**dadurch gekennzeichnet,**
**dass** in der ACU (222, 242, 262, 282) mindestens ein weiterer, Beschleunigungen in Richtung der negativen x-Achse erfassender Beschleunigungssensor (224, 244, 264, 284) angeordnet ist, als Sicherungs-Sensor zur Plausibilisierung eines Frontal-Crashs.

11. Sensoranordnung (200, 210) für ein Rückhaltesystem in einem Fahrzeug, insbesondere einem Nutzfahrzeug, bei dem die Seitentüren der Fahrgastkabine bzw. des Führerhauses (201, 211) unmittelbar an denjenigen Bereich angrenzen, in dem das Fahrzeug im Fall eines Frontal-Crashs, eines Rear-Crashes, eines Offset-Crashs oder eines Angular-Frontal-Crashs getroffen wird, umfassend eine Airbag-Kontroll-Einheit (ACU; Airbag Control Unit) (202, 212) mit mindestens einem darin integrierten, Beschleunigungen in Richtung der x-Achse erfassenden Beschleunigungssensor (203, 204, 213, 214),
**dadurch gekennzeichnet,**
**dass** in der ACU mindestens ein weiterer, Beschleunigungen in Richtung der y-Achse erfassender Beschleunigungssensor (205, 215) angeordnet ist, als Sensor zur Offset-Crash und/oder Angular-Frontal-Crash Erkennung und/oder als Sicherungs-Sensor zur Side-Crash Erkennung.

12. Sensoranordnung nach Anspruch 11,
**dadurch gekennzeichnet,**
**dass** die Sensoranordnung (200, 210)
einen in der ACU (202, 212) angeordneten, Beschleunigungen in Richtung der x-Achse erfassenden Beschleunigungssensor (203, 213) als Haupt-Sensor (203, 213) zur Frontal-Crash Erkennung,
einen in der ACU (202, 212) angeordneten, Beschleunigungen in Richtung der negativen x-Achse erfassenden Beschleunigungssensor (204, 214) als Sicherungs-Sensor (204, 214) zur Plausibilisierung der Frontal-Crash Erkennung, sowie
einen in der ACU (202, 212) angeordneten, Beschleunigungen in Richtung der y-Achse erfassenden Beschleunigungssensor (205, 215) als Sensor (205, 215) zur Erkennung von bzw. Unterscheidung zwischen Offset-Crashs und/oder Angular-Frontal-Crashs
umfasst.

13. Sensoranordnung nach einem der vorhergehenden Ansprüche,
**dadurch gekennzeichnet,**
**dass** die Sensoranordnung (210, 240, 280) zusätzlich mindestens einen in Form eines Satelliten (216, 246, 286) außerhalb der ACU (212, 242, 282) angeordneten, Beschleunigungen in Richtung der x-Achse erfassenden Beschleunigungssensor (217, 247, 287) als Haupt-Sensor (217, 247, 287) zur Frontal-Crash Erkennung umfasst.
